(19) Europäisches Patentamt
European Patent Office
Office européen des brevets

(11) **EP 4 135 432 A1**

(12) **EUROPEAN PATENT APPLICATION**
published in accordance with Art. 153(4) EPC

(43) Date of publication:
**15.02.2023 Bulletin 2023/07**

(21) Application number: **21804815.5**

(22) Date of filing: **10.05.2021**

(51) International Patent Classification (IPC):
***H04W 72/00*** (2009.01)

(52) Cooperative Patent Classification (CPC):
**H04W 72/00**

(86) International application number:
**PCT/CN2021/092682**

(87) International publication number:
**WO 2021/228030 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2020 CN 202010414749**
**10.02.2021 CN 202110183216**

(71) Applicant: **Huawei Technologies Co., Ltd.**
**Longgang District,**
**Shenzhen,**
**Guangdong 518129 (CN)**

(72) Inventors:
• **QIAO, Liang**
**Shenzhen, Guangdong 518129 (CN)**
• **ZHANG, Jiayin**
**Shenzhen, Guangdong 518129 (CN)**
• **JIA, Qiong**
**Shenzhen, Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **METHOD AND APPARATUS FOR DETERMINING MASTER INFORMATION BLOCK**

(57)    A master information block MIB determining method and apparatus are provided, to resolve a problem in a conventional technology that a terminal device cannot determine whether a received MIB belongs to a licensed frequency band or an unlicensed frequency band, and consequently, the terminal device fails to demodulate the MIB and cannot access a cell on a specified frequency band. The method is: A network device sends a synchronization information block to a terminal device. At least one field in an MIB included in the synchronization information block is used to indicate whether an MIB is an MIB applied to an unlicensed frequency band. After receiving the synchronization information block from the network device, the terminal device determines, based on the field in the MIB included in the synchronization information block, that the MIB is an MIB applied to the unlicensed frequency band. In this way, the terminal device can determine, based on the at least one field in the MIB in the synchronization information block, whether the received MIB is an MIB applied to the unlicensed frequency band, to accurately access a corresponding cell subsequently.

FIG. 3

**Description**

**CROSS-REFERENCE TO RELATED APPLICATIONS**

This application claims priority to Chinese Patent Application No. 202010414749.6, filed with the China National Intellectual Property Administration on May 15, 2020 and entitled "MASTER INFORMATION BLOCK DETERMINING METHOD AND APPARATUS", and claims priority to Chinese Patent Application No. 202110183216.6, filed with the China National Intellectual Property Administration on February 10, 2021 and entitled "MASTER INFORMATION BLOCK DETERMINING METHOD AND APPARATUS", which are incorporated herein by reference in their entireties.

**TECHNICAL FIELD**

This application relates to the field of communications technologies, and in particular, to a master information block (master information block, MIB) determining method and apparatus.

**BACKGROUND**

As a communications technology evolves, an available frequency band is continuously increased. In a new radio (new radio, NR) system, a frequency band is mainly divided into two parts: a frequency range 1 (frequency range 1, FR 1) and an FR 2. The FR 1 is mainly a bandwidth of 450 MHz to 6 GHz, and the FR 2 is mainly a bandwidth of 24.25 GHz to 52.6 GHz. A frequency band between 6425 MHz and 7125 MHz (U6 GHz) is used as a shared frequency band, and belongs to the FR 1.

To assist a licensed frequency band, the system is deployed on the shared frequency band, to not only improve a throughput of the system, but also resolve a problem that a spectrum resource is short. In context of a 5th generation mobile communications technology, a technology of deploying the system on the shared frequency band is uniformly referred to as a radio unlicensed frequency band technology (new radio unlicensed, NRU). The system operating on the shared frequency band needs to support all or some of the following key technologies: a listen before talk (listen before talk, LBT) mechanism, transmit power control (transmit power control, TPC), and dynamic frequency selection (dynamic frequency selection, DFS).

After scanning a frequency on each band (band), a terminal device blindly detects a signal/information block pattern (synchronization signal block pattern, SS/PBCH block pattern) sent by a base station. A synchronization information block (SS/PBCH block) is information that is to be first demodulated by the terminal device in an initial access process. The synchronization information block mainly includes a primary synchronization signal (primary synchronization signal, PSS), a secondary synchronization signal (secondary synchronization signal, SSS), and a physical broadcast channel (physical broadcast channel, PBCH), and includes a two-dimensional region of four orthogonal frequency division multiplexing (orthogonal frequency division multiplexing, OFDM) symbols in time-frequency domain and 20 resource blocks (resource blocks, RBs) in frequency domain. The terminal device may complete cell synchronization and coarse symbol-level timing synchronization by demodulating the PSS and the SSS. The PBCH carries an MIB configured by a higher layer. The terminal device may complete system frame-level timing synchronization, or the like by demodulating the MIB.

Currently, MIBs sent by base stations operating on the licensed frequency band and an unlicensed frequency band carry different information. However, the frequency band U6 GHz may include some licensed frequency bands and some unlicensed frequency bands in some regions, and include only licensed frequency bands in other regions. Therefore, the terminal device cannot determine whether a received MIB belongs to the licensed frequency band or the unlicensed frequency band. Consequently, the terminal device fails to demodulate the MIB and cannot access a cell on a specified frequency band.

**SUMMARY**

This application provides a master information block MIB determining method and apparatus, to resolve a problem in a conventional technology that a terminal device cannot determine whether a received MIB belongs to a licensed frequency band or an unlicensed frequency band, and consequently, the terminal device fails to demodulate the MIB and cannot access a cell on a specified frequency band.

According to a first aspect, this application provides an MIB determining method. The method includes: A network device sends a synchronization information block to a terminal device. At least one field included in the synchronization information block is used to indicate whether an MIB is an MIB applied to an unlicensed frequency band. After receiving the synchronization information block from the network device, the terminal device determines, based on the at least one field included in the synchronization information block, whether the MIB is an MIB applied to the unlicensed frequency band. The at least one field is located in the MIB.

According to the method, the terminal device may determine, based on a field in an MIB in the synchronization information block, whether a received MIB is an MIB applied to the unlicensed frequency band.

In a possible design, the at least one field is a spare (spare) field, and the spare field includes 1 bit; and when the 1 bit is 0, the MIB is an MIB applied to the unlicensed frequency band, and when the 1 bit is not 0, the MIB is an MIB applied to a licensed frequency band; or when the 1 bit is 1, the MIB is an MIB applied to the unlicensed frequency band, and when the 1 bit is not 1, the MIB is an MIB applied to a licensed frequency band.

According to the method, the terminal device may determine, based on the detected spare field, whether the received MIB is an MIB applied to the unlicensed frequency band.

In a possible design, the at least one field is a demodulation reference signal type A position field, and the demodulation reference signal type A position field includes 1 bit; and when the 1 bit is 0, the MIB is an MIB applied to the unlicensed frequency band, and when the 1 bit is not 0, the MIB is an MIB applied to a licensed frequency band; or when the 1 bit is 1, the MIB is an MIB applied to the unlicensed frequency band, and when the 1 bit is not 1, the MIB is an MIB applied to a licensed frequency band.

According to the method, the terminal device may determine, based on the detected demodulation reference signal type A position field, whether the received MIB is an MIB applied to the unlicensed frequency band.

In a possible design, the at least one field is a synchronization signal subcarrier offset field, and the synchronization signal subcarrier offset field includes 4 bits; and a least significant bit in the 4 bits is used to indicate whether the MIB is an MIB applied to the unlicensed frequency band; or a most significant bit in the 4 bits is used to indicate whether the MIB is an MIB applied to the unlicensed frequency band; or any bit in the 4 bits is used to indicate whether the MIB is an MIB applied to the unlicensed frequency band; or at least 2 bits in the 4 bits are combined to indicate whether the MIB is an MIB applied to the unlicensed frequency band.

According to the method, the terminal device may flexibly determine, based on the detected synchronization signal subcarrier offset field, whether the received MIB is an MIB applied to the unlicensed frequency band.

In a possible design, when the least significant bit, the most significant bit, or the any bit is 0, the MIB is an MIB applied to the unlicensed frequency band, and when the least significant bit, the most significant bit, or the any bit is not 0, the MIB is an MIB applied to a licensed frequency band; or when the least significant bit, the most significant bit, or the any bit is 1, the MIB is an MIB applied to the unlicensed frequency band, and when the least significant bit, the most significant bit, or the any bit is not 1, the MIB is an MIB applied to a licensed frequency band.

According to the method, the terminal device may determine, based on a bit in the detected synchronization signal subcarrier offset field, whether the received MIB is an MIB applied to the unlicensed frequency band. There is a simple implementation.

In a possible design, the at least one field includes at least two fields in a spare field, a demodulation reference signal type A position field, or a synchronization signal subcarrier offset field; and bits included in the at least two fields are combined to indicate whether the MIB is an MIB applied to the unlicensed frequency band. In this way, the terminal device may determine, based on at least one field in the MIB in the synchronization information block, whether the received MIB is an MIB applied to the unlicensed frequency band.

According to a second aspect, this application provides an MIB determining method. The method may include: A network device sends a synchronization information block to a terminal device. A time domain position of at least one of a PSS, an SSS, and PBCH information included in the synchronization information block is used to indicate whether an MIB included in the synchronization information block is an MIB applied to an unlicensed frequency band. After receiving the synchronization information block from the network device, the terminal device determines, based on the time domain position of the at least one of the PSS, the SSS, and the PBCH information included in the synchronization information block, whether the MIB is an MIB applied to the unlicensed frequency band.

According to the method, the terminal device may determine, based on the time domain position of the at least one of the PSS, the SSS, and the PBCH information included in the synchronization information block, whether the received MIB is an MIB applied to the unlicensed frequency band, to accurately access a corresponding cell subsequently.

In a possible design, that a time domain position of at least one of the PSS and the SSS is used to indicate whether the MIB included in the synchronization information block is an MIB applied to the unlicensed frequency band may be specifically: when the PSS is located on a first orthogonal frequency division multiplexing OFDM symbol of the synchronization information block, the MIB is an MIB applied to the unlicensed frequency band, and when the PSS is not located on the first orthogonal frequency division multiplexing OFDM symbol of the synchronization information block, the MIB is an MIB applied to a licensed frequency band; or when the PSS is located on a third OFDM symbol of the synchronization information block, the MIB is an MIB applied to the unlicensed frequency band, and when the PSS is not located on the third OFDM symbol of the synchronization information block, the MIB is an MIB applied to a licensed frequency band; or when the SSS is located on a third OFDM symbol of the synchronization information block, the MIB is an MIB applied to the unlicensed frequency band, and when the SSS is not located on the third OFDM symbol of the synchronization information block, the MIB is an MIB applied to a licensed frequency band; or when the SSS is located on a first OFDM symbol of the synchronization information block, the MIB is an MIB applied to the unlicensed frequency band, and when the SSS is not located on the first OFDM symbol of the synchronization information block, the MIB is an MIB applied to a licensed frequency band; or when the PSS is located on a first OFDM symbol of the synchronization information block and the SSS is located on a third OFDM symbol of the synchronization information block, the MIB is an MIB applied to the unlicensed frequency band, and when the PSS is not located on the first OFDM symbol of the synchronization information block and the SSS is not located on the third OFDM symbol of the synchronization information block, the MIB is an MIB applied to a licensed frequency band; or when the PSS is located on a third OFDM symbol of the synchronization information block and the SSS is located on a first OFDM symbol of the synchronization information block, the MIB is an MIB applied to the unlicensed frequency band, and when the PSS is not located on the third OFDM symbol of the synchronization information block and the SSS is not located on the first OFDM symbol of the synchronization information block, the MIB is an MIB applied to a licensed frequency band.

According to the method, the terminal device may determine, based on the time domain position of the at least one of the detected PSS and SSS, whether the received MIB is an MIB applied to the unlicensed frequency band.

In a possible design, that a time domain position of the PBCH information is used to indicate whether the MIB included in the synchronization information block is an MIB applied to the unlicensed frequency band may be specifically: when first PBCH information is located in a first frequency domain position on the first OFDM symbol of the synchronization information block, and/or second PBCH information is located in a second frequency domain position on the first OFDM symbol of the synchronization information block, the MIB is an MIB applied to the unlicensed frequency band, and when the first PBCH information is not located in the first frequency domain position on the first OFDM symbol of the synchronization information block, and/or the second PBCH information is not located in the second frequency domain position on the first OFDM symbol of the synchronization information block, the MIB is an MIB applied to the licensed frequency band; or when first PBCH information is located in a first frequency domain position on the third OFDM symbol of the synchronization information block, and second PBCH information is located in a second frequency domain position on the third OFDM symbol of the synchronization information block, the MIB is an MIB applied to the unlicensed frequency band, and when the first PBCH information is not located in the first frequency domain position on the third OFDM symbol of the synchronization information block, and the second PBCH information is not located in the second frequency domain position on the third OFDM symbol of the synchronization information block, the MIB is an MIB applied to the licensed frequency band; or when a first demodulation reference signal DMRS is located in a third frequency domain position on the first OFDM symbol of the synchronization information block, and/or a second DMRS is located in a fourth frequency domain position on the first OFDM symbol of the synchronization information block, the MIB is an MIB applied to the unlicensed frequency band, and when the first demodulation reference signal DMRS is not located in the third frequency domain position on the first OFDM symbol of the synchronization information block, and/or the second DMRS is not located in the fourth frequency domain position on the first OFDM symbol of the synchronization information block, the MIB is an MIB applied to the licensed frequency band; or when a first DMRS is located in a third frequency domain position on the third OFDM symbol of the synchronization information block, and a second DMRS is located in a fourth frequency domain position on the third OFDM symbol of the synchronization information block, the MIB is an MIB applied to the unlicensed frequency band, and when the first DMRS is not located in the third frequency domain position on the third OFDM symbol of the synchronization information block, and the second DMRS is not located in the fourth frequency domain position on the third OFDM symbol of the synchronization information block, the MIB is an MIB applied to the licensed frequency band, where the first DMRS is included in the first PBCH information, and the second DMRS is included in the second PBCH information.

According to the method, the terminal device may determine, based on the time domain position of the detected PCBH information or based on a position of a DMRS included in the detected PBCH information, whether the received MIB is an MIB applied to the unlicensed frequency band.

In a possible design, the first frequency domain position includes subcarriers whose subcarrier sequence numbers are {0, 1, ..., 47} on the synchronization information block, and the second frequency domain position includes subcarriers whose subcarrier sequence numbers are {192, 193, ..., 239} on the synchronization information block; or the first frequency domain position includes subcarriers whose subcarrier sequence numbers are {192, 193, ..., 239} on the synchronization information block, and the second frequency domain position includes subcarriers whose subcarrier sequence numbers are {0, 1, ..., 47} on the synchronization information block.

In a possible design, the third frequency domain position includes subcarriers whose subcarrier sequence numbers are {0+v, 4+v, ..., 44+v} on the synchronization information block, and the fourth frequency domain position includes subcarriers whose subcarrier sequence numbers are {192+v, 196+v, ..., 236+v} on the synchronization information block; or the first frequency domain position includes subcarriers whose subcarrier sequence numbers are {192+v, 196+v, ..., 236+v} on the synchronization information block, and the second frequency domain position includes subcarriers whose subcarrier sequence numbers are {0+v, 4+v, ..., 44+v} on the synchronization information block, where

$$v = N_{ID}^{cell} \bmod 4$$ , and $N_{ID}^{cell}$ is a cell identifier.

In a possible design, no information is included on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184, ..., 239} on the third OFDM symbol of the synchronization information block; or no information is included on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block; or no information is included on subcarriers whose subcarrier sequence numbers are {48, 49, ..., 55} and subcarriers whose subcarrier sequence numbers are {183, 184, ..., 192} on the first OFDM symbol of the synchronization information block, and no information is included on subcarriers whose subcarrier sequence numbers are {0, 1, ..., 55} and subcarriers whose subcarrier sequence numbers are {183, 184, ..., 239} on the third OFDM symbol of the synchronization information block; or no information is included on subcarriers whose subcarrier sequence numbers are {0, 1, ..., 55} and subcarriers whose subcarrier sequence numbers are {183, 184, ..., 239} on the first OFDM symbol of the synchronization information block, and no information is included on subcarriers whose subcarrier sequence numbers are {48, 49, ..., 55} and subcarriers whose subcarrier sequence numbers are {183, 184, ..., 192} on the third OFDM symbol of the synchronization information block.

According to the method, the terminal device may determine a position in which no information is included on the synchronization information block when the received MIB is an MIB applied to the unlicensed frequency band, or may determine a position in which no information is included on the synchronization information block when the received MIB is not an MIB applied to the unlicensed frequency band.

According to a third aspect, this application provides an MIB determining method. The method includes: A network device sends a synchronization information block to a terminal device. At least one field included in the synchronization information block is used to indicate that an MIB is a first-type MIB or a second-type MIB. After receiving the synchronization information block from the network device, the terminal device determines, based on the at least one field included in the synchronization information block, that the MIB is a first-type MIB or a second-type MIB. The at least one field is located in the MIB. The first-type MIB corresponds to a licensed frequency band, and the second-type MIB corresponds to an unlicensed frequency band; or the first-type MIB corresponds to an unlicensed frequency band, and the second-type MIB corresponds to a licensed frequency band.

According to the method, the terminal device may determine, based on the at least one field in the synchronization information block, whether a received MIB is an MIB applied to the unlicensed frequency band or an MIB applied to the licensed frequency band, to accurately access a corresponding cell subsequently.

In a possible design, the at least one field is a spare field, and the spare field includes 1 bit; and when the 1 bit is 0, the MIB is a first-type MIB, and when the 1 bit is 1, the MIB is a second-type MIB.

According to the method, the terminal device may determine, based on a specific value of the detected spare field, whether the received MIB is an MIB applied to the unlicensed frequency band or an MIB applied to the licensed frequency band.

In a possible design, the at least one field is a demodulation reference signal type A position field, and the demodulation reference signal type A position field includes 1 bit; when the 1 bit is 0, the MIB is a first-type MIB, and when the 1 bit is 1, the MIB is a second-type MIB.

According to the method, the terminal device may determine, based on a specific value of the detected demodulation reference signal type A position field, whether the received MIB is an MIB applied to the unlicensed frequency band or an MIB applied to the licensed frequency band.

In a possible design, the at least one field is a synchronization signal subcarrier offset field, and the synchronization signal subcarrier offset field includes 4 bits; and a least significant bit in the 4 bits is used to indicate that the MIB is a first-type MIB or a second-type MIB; or a most significant bit in the 4 bits is used to indicate that the MIB is a first-type MIB or a second-type MIB; or any bit in the 4 bits is used to indicate that the MIB is a first-type MIB or a second-type MIB; or at least 2 bits in the 4 bits are combined to indicate that the MIB is a first-type MIB or a second-type MIB.

According to the method, the terminal device may flexibly determine, based on a specific value of the detected synchronization signal subcarrier offset field, whether the received MIB is an MIB applied to the unlicensed frequency band or an MIB applied to the licensed frequency band.

In a possible design, when the least significant bit, the most significant bit, or the any bit is 0, the MIB is a first-type MIB, and when the least significant bit, the most significant bit, or the any bit is 1, the MIB is a second-type MIB.

According to the method, the terminal device may determine, based on a specific value of a bit in the detected synchronization signal subcarrier offset field, whether the received MIB is an MIB applied to the unlicensed frequency band or an MIB applied to the licensed frequency band. There is a simple implementation.

In a possible design, the at least one field includes at least two fields in a spare field, a demodulation reference signal type A position field, or a synchronization signal subcarrier offset field; and bits included in the at least two fields are combined to indicate that the MIB is a first-type MIB or a second-type MIB. In this way, the terminal device may determine, based on at least one field in an MIB in the synchronization information block, whether the received MIB is an MIB applied to the unlicensed frequency band or an MIB applied to the licensed frequency band.

According to a fourth aspect, this application provides an MIB determining method. The method may include: A network device sends a synchronization information block to a terminal device. A time domain position of at least one of a primary synchronization signal PSS, a secondary synchronization signal SSS, and physical broadcast channel PBCH information included in the synchronization information block is used to indicate that an MIB included in the synchronization information block is a first-type MIB or a second-type MIB. After receiving the synchronization information block from the network device, the terminal device determines, based on the time domain position of the at least one of the PSS, the SSS, and the PBCH information included in the synchronization information block, that the MIB is a first-type MIB or a second-type MIB. The first-type MIB corresponds to a licensed frequency band, and the second-type MIB corresponds to an unlicensed frequency band; or the first-type MIB corresponds to an unlicensed frequency band, and the second-type MIB corresponds to a licensed frequency band.

According to the method, the terminal device may determine, based on the time domain position of the at least one of the PSS, the SSS, and the PBCH information included in the synchronization information block, whether the received MIB is an MIB applied to the unlicensed frequency band or an MIB applied to the licensed frequency band, to accurately access a corresponding cell subsequently.

In a possible design, that a time domain position of at least one of the PSS and the SSS is used to indicate that the MIB included in the synchronization information block is a first-type MIB or a second-type MIB may be specifically: when the PSS is located on a first orthogonal frequency division multiplexing OFDM symbol of the synchronization information block, the MIB is a first-type MIB, and when the PSS is located on a third OFDM symbol of the synchronization information block, the MIB is a second-type MIB; and/or when the SSS is located on the third OFDM symbol of the synchronization information block, the MIB is a first-type MIB, and when the SSS is located on the first OFDM symbol of the synchronization information block, the MIB is a second-type MIB.

According to the method, the terminal device may determine, based on the time domain position of the at least one of the detected PSS and SSS, whether the received MIB is an MIB applied to the unlicensed frequency band or an MIB applied to the licensed frequency band.

In a possible design, that a time domain position of the PBCH information is used to indicate that the MIB included in the synchronization information block is a first-type MIB or a second-type MIB may be specifically: when first PBCH information is located in a first frequency domain position on the first OFDM symbol of the synchronization information block, and/or second PBCH information is located in a second frequency domain position on the first OFDM symbol of the synchronization information block, the MIB is a first-type MIB, and when the first PBCH information is located in the first frequency domain position on the third OFDM symbol of the synchronization information block, and the second PBCH information is located in the second frequency domain position on the third OFDM symbol of the synchronization information block, the MIB is a second-type MIB; or when a first demodulation reference signal DMRS is located in a third frequency domain position on the first OFDM symbol of the synchronization information block, and/or a second DMRS is located in a fourth frequency domain position on the first OFDM symbol of the synchronization information block, the MIB is a first-type MIB, and when the first DMRS is located in the third frequency domain position on the third OFDM symbol of the synchronization information block, and the second DMRS is located in the fourth frequency domain position on the third OFDM symbol of the synchronization information block, the MIB is a second-type MIB, where the first DMRS is included in the first PBCH information, and the second DMRS is included in the second PBCH information.

According to the method, the terminal device may determine, based on the time domain position of the detected PCBH information or a position of a DMRS included in the detected PBCH information, whether the received MIB is an MIB applied to the unlicensed frequency band or an MIB applied to the licensed frequency band.

In a possible design, the first frequency domain position includes subcarriers whose subcarrier sequence numbers are {0, 1, ..., 47} on the synchronization information block, and the second frequency domain position includes subcarriers whose subcarrier sequence numbers are {192, 193, ..., 239} on the synchronization information block; or the first frequency domain position includes subcarriers whose subcarrier sequence numbers are {192, 193, ..., 239} on the synchronization information block, and the second frequency domain position includes subcarriers whose subcarrier sequence numbers are {0, 1, ..., 47} on the synchronization information block.

In a possible design, the third frequency domain position includes subcarriers whose subcarrier sequence numbers are {0+v, 4+v, ..., 44+v} on the synchronization information block, and the fourth frequency domain position includes subcarriers whose subcarrier sequence numbers are {192+v, 196+v, ..., 236+v} on the synchronization information block; or the first frequency domain position includes subcarriers whose subcarrier sequence numbers are {192+v, 196+v, ..., 236+v} on the synchronization information block, and the second frequency domain position includes subcarriers whose subcarrier sequence numbers are {0+v, 4+v, ..., 44+v} on the synchronization information block, where

$$v = N_{ID}^{cell} \bmod 4$$, and $N_{ID}^{cell}$ is a cell identifier.

In a possible design, no information is included on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184, ..., 239} on the third OFDM symbol of the synchronization information block; or no information is included on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block; or no information is included on subcarriers whose subcarrier sequence numbers are {48, 49, ..., 55} and subcarriers whose subcarrier sequence numbers are {183, 184, ..., 192} on the first OFDM symbol of the synchronization information block, and no information is included on subcarriers whose subcarrier sequence numbers are {0, 1, ..., 55} and subcarriers whose subcarrier sequence numbers are {183, 184, ..., 239} on the third OFDM symbol of the synchronization information block; or no information is included on subcarriers whose subcarrier sequence numbers are {0, 1, ..., 55} and subcarriers whose subcarrier sequence numbers are {183, 184, ..., 239} on the first OFDM symbol of the synchronization information block, and no information is included on subcarriers whose subcarrier sequence numbers are {48, 49, ..., 55} and subcarriers whose subcarrier sequence numbers are {183, 184, ..., 192} on the third OFDM symbol of the synchronization information block.

According to the method, the terminal device may determine a position in which no information is included on the synchronization information block when the received MIB is an MIB applied to the unlicensed frequency band, or may determine a position in which no information is included on the synchronization information block when the received MIB is an MIB applied to a licensed frequency band.

According to a fifth aspect, this application further provides an MIB determining apparatus. The MIB determining apparatus may be a terminal device. The MIB determining apparatus has a function of implementing the terminal device in any one of the first aspect or the possible design examples of the first aspect, any one of the second aspect or the possible design examples of the second aspect, any one of the third aspect or the possible design examples of the third aspect, and any one of the fourth aspect or the possible design examples of the fourth aspect. The function may be implemented by hardware, or may be implemented by hardware executing corresponding software. The hardware or the software includes one or more modules corresponding to the foregoing function.

In a possible design, a structure of the MIB determining apparatus includes a transceiver unit and a processing unit. These units may perform corresponding functions of the terminal device in any one of the first aspect or the possible design examples of the first aspect, any one of the second aspect or the possible design examples of the second aspect, any one of the third aspect or the possible design examples of the third aspect, and any one of the fourth aspect or the possible design examples of the fourth aspect. For details, refer to detailed descriptions in the method examples. Details are not described herein again.

In a possible design, a structure of the MIB determining apparatus includes a transceiver and a processor, and optionally, further includes a memory. The transceiver is configured to send and receive data, and is configured to communicate and interact with another device in a communications system. The processor is configured to support the MIB determining apparatus to perform corresponding functions of the terminal device in any one of the first aspect or the possible design examples of the first aspect, any one of the second aspect or the possible design examples of the second aspect, any one of the third aspect or the possible design examples of the third aspect, and any one of the fourth aspect or the possible design examples of the fourth aspect. The memory is coupled to the processor, and the memory stores program instructions and data that are necessary for the MIB determining apparatus.

According to a sixth aspect, this application further provides an MIB determining apparatus. The MIB determining apparatus may be a network device. The MIB determining apparatus has a function of implementing the network device in any one of the first aspect or the possible design examples of the first aspect, any one of the second aspect or the possible design examples of the second aspect, any one of the third aspect or the possible design examples of the third aspect, and any one of the fourth aspect or the possible design examples of the fourth aspect. The function may be implemented by hardware, or may be implemented by hardware executing corresponding software. The hardware or the software includes one or more modules corresponding to the foregoing function.

In a possible design, a structure of the MIB determining apparatus includes a transceiver unit and a processing unit. These units may perform corresponding functions of the network device in any one of the first aspect or the possible design examples of the first aspect, any one of the second aspect or the possible design examples of the second aspect, any one of the third aspect or the possible design examples of the third aspect, and any one of the fourth aspect or the possible design examples of the fourth aspect. For details, refer to detailed descriptions in the method examples. Details are not described herein again.

In a possible design, a structure of the MIB determining apparatus includes a transceiver and a processor, and optionally, further includes a memory. The transceiver is configured to send and receive data, and is configured to communicate and interact with another device in a communications system. The processor is configured to support the MIB determining apparatus to perform corresponding functions of the network device in any one of the first aspect or the possible design examples of the first aspect, any one of the second aspect or the possible design examples of the second aspect, any one of the third aspect or the possible design examples of the third aspect, and any one of the fourth aspect or the possible design examples of the fourth aspect. The memory is coupled to the processor, and the memory stores program instructions and data that are necessary for the apparatus.

According to a seventh aspect, an embodiment of this application provides a communications system. The communications system may include the terminal device and the network device that are mentioned above.

According to an eighth aspect, an embodiment of this application provides a computer-readable storage medium. The computer-readable storage medium stores program instructions. When the program instructions run on a computer, the computer is enabled to perform any one of the first aspect and the possible designs thereof, any one of the second aspect and the possible designs thereof, any one of the third aspect and the possible designs thereof, or any one of the fourth aspect and the possible designs thereof in embodiments of this application. For example, the computer-readable storage medium may be any usable medium that can be accessed by a computer. By way of example rather than limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product including computer program code or instructions. When the computer program product runs on a computer, the computer is enabled to implement the method according to any one of the aspects.

According to a tenth aspect, this application further provides a chip. The chip is coupled to a memory, and is configured to read and execute program instructions stored in the memory, to implement any one of the methods.

For each aspect of the fifth aspect to the tenth aspect and technical effects that may be achieved by each aspect, refer to descriptions of technical effects that may be achieved by each possible solution in the first aspect to the fourth aspect. Details are not described herein again.

**BRIEF DESCRIPTION OF DRAWINGS**

FIG. 1 is a schematic diagram of a structure of a synchronization information block according to this application;
FIG. 2 is a schematic diagram of an architecture of a communications system according to this application;
FIG. 3 is a flowchart of an MIB determining method according to this application;
FIG. 4 is a flowchart of another MIB determining method according to this application;
FIG. 5 is a schematic diagram of a structure of another synchronization information block according to this application;
FIG. 6 is a schematic diagram of a structure of another synchronization information block according to this application;
FIG. 7 is a schematic diagram of a structure of another synchronization information block according to this application;
FIG. 8 is a flowchart of another MIB determining method according to this application;
FIG. 9 is a flowchart of another MIB determining method according to this application;
FIG. 10 is a schematic diagram of a structure of an MIB determining apparatus according to this application;
FIG. 11 is a diagram of a structure of an MIB determining apparatus according to this application;
FIG. 12 is a flowchart of another MIB determining method according to this application;
FIG. 13 is a schematic diagram of sending a synchronization information block according to this application; and
FIG. 14 is a schematic diagram of sending another synchronization information block according to this application.

**DESCRIPTION OF EMBODIMENTS**

The following further describes in detail this application with reference to accompanying drawings.

An embodiment of this application provides an MIB determining method and apparatus, to resolve a problem in a conventional technology that a terminal device cannot determine whether a received MIB belongs to a licensed frequency band or an unlicensed frequency band, and consequently, the terminal device fails to demodulate the MIB and cannot access a cell on a specified frequency band. The method and the apparatus in this application are based on a same technical concept. Because the method and the apparatus have a similar principle for resolving the problem, mutual reference may be made between apparatus implementations and method implementations. Repeated descriptions are not provided again.

In the following, some terms in this application are explained and described, to facilitate understanding of a person skilled in the art.

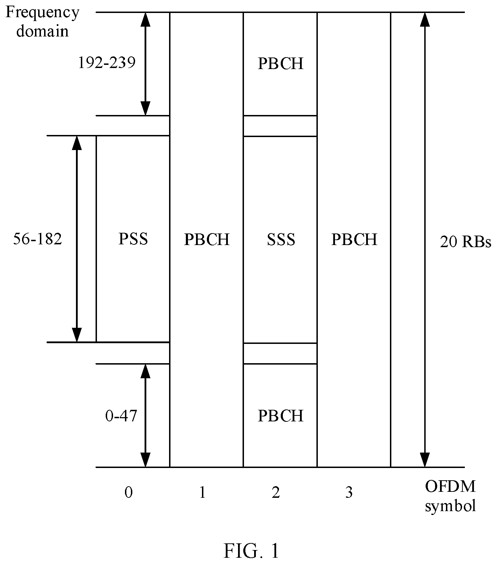

Currently, a synchronization information block SS/PBCH block sent by a network device to a terminal device may be shown in a structure shown in FIG. 1. The synchronization information block includes a PSS, an SSS, and a PBCH, and includes a two-dimensional region of four OFDM symbols in time-frequency domain and 20 RBs in frequency domain. In some implementations, the synchronization information block may also be referred to as a synchronization signal block. The terminal device may complete cell synchronization and coarse symbol-level timing synchronization by demodulating the PSS and the SSS. The PBCH carries MIB information configured by a higher layer. The terminal device may complete system frame-level timing synchronization, or the like by demodulating the MIB information, and obtain position information of a system information block 1/remaining minimum system information (system information block/remaining minimum system information, SIB 1/RMSI), to further demodulate information in the SIB 1/RMSI. In other words, a type 0-physical downlink control channel (physical downlink control channel, type 0-PDCCH) of the SIB 1/RMSI and a physical downlink shared channel (physical downlink shared channel, PDSCH) are demodulated by using a parameter (pdcch-ConfigSIB 1).

Based on a latest standard R16, the terminal device obtains a specific time domain position of the type 0-PDCCH based on a correspondence table specified in a protocol. However, a table used by a terminal device operating on a licensed frequency band to obtain the specific time domain position of the type 0-PDCCH is different from a table used by a terminal device operating on an unlicensed frequency band to obtain the specific time domain position of the type 0-PDCCH. In addition, an MIB operating on the licensed frequency band and an MIB operating on the unlicensed frequency band also have different content, and the different content is mainly different parameters, namely, a common subcarrier spacing (subCarrierSpacingCommon) and a synchronization signal subcarrier offset (ssb-SubcarrierOffset) of the MIBs. Specifically, for the licensed frequency band, the parameter "subCarrierSpacingCommon" indicates a subcarrier spacing used by an SIB 1, Msg 2/4, paging, and other system information (open system interconnect reference model (open system interconnect reference model, OSI)), and the parameter "ssb-SubcarrierOffset" indicates a subcarrier offset, namely, Kssb, between an SS/PBCH block and an overlapping common resource block (Common resource block, CRB), a spacing between a subcarrier with a number 0 in an RB with a smallest number in RBs occupied by the SS/PBCH block and a subcarrier with a number 0 in the CRB. For the unlicensed frequency band, the terminal device determines, through demodulation, that a subcarrier spacing (sub-carrier spacing, SCS) of the SIB 1 is the same as an SCS of an SS/PBCH block having a quasi co-location (quasi co-location, QCL) relationship with the SIB 1. Therefore, the parameter "subCarrierSpacingCommon" used for another purpose.

It can be learned from the foregoing that the MIB applied to the licensed frequency band is different from the MIB applied to the unlicensed frequency band. Frequency bands U6 GHz (6425 MHz to 7125 MHz) and 52.6 GHz to 71 GHz may include some licensed frequency bands and some unlicensed frequency bands in some regions, and include only licensed frequency bands in other regions. Therefore, the terminal device cannot determine whether a received MIB is applied to the licensed frequency band or the unlicensed frequency band. Consequently, the terminal device fails to demodulate the MIB and cannot access a cell on a specified frequency band. Based on this, this application provides an MIB determining method, to resolve the problem, so that the terminal device can determine whether the received MIB is applied to the licensed frequency band or the unlicensed frequency band.

In this application, names of the MIB applied to the licensed frequency band and the MIB applied to the unlicensed frequency band may be distinguished. Specifically, the MIB corresponding to the licensed frequency band may be referred to as a first-type MIB, and the MIB corresponding to the unlicensed frequency band may be referred to as a second-type MIB; or the MIB corresponding to the licensed frequency band is referred to as a second-type MIB, and the MIB corresponding to the unlicensed frequency band is referred to as a first-type MIB. Alternatively, the MIB corresponding to the licensed frequency band may be referred to as a new MIB, and the MIB corresponding to the unlicensed frequency band may be referred to as an old MIB; or the MIB corresponding to the licensed frequency band is referred to as an old MIB, and the MIB corresponding to the unlicensed frequency band is referred to as a new MIB. Certainly, there may be another name. This is not limited in this application.

In description of this application, terms such as "first" and "second" are merely used for distinguishing and description, but cannot be understood as indicating or implying relative importance, or cannot be understood as indicating or implying a sequence.

In this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items" or a similar expression thereof refers to any combination of these items, including a singular item or any combination of plural items. For example, at least one of a, b, or c may indicate: a, b, c, a and b, a and c, b and c, or a, b, and c, where a, b, and c may be singular or plural.

To more clearly describe the technical solutions in embodiments of this application, the following describes in detail the MIB determining method and apparatus provided in embodiments of this application with reference to accompanying drawings.

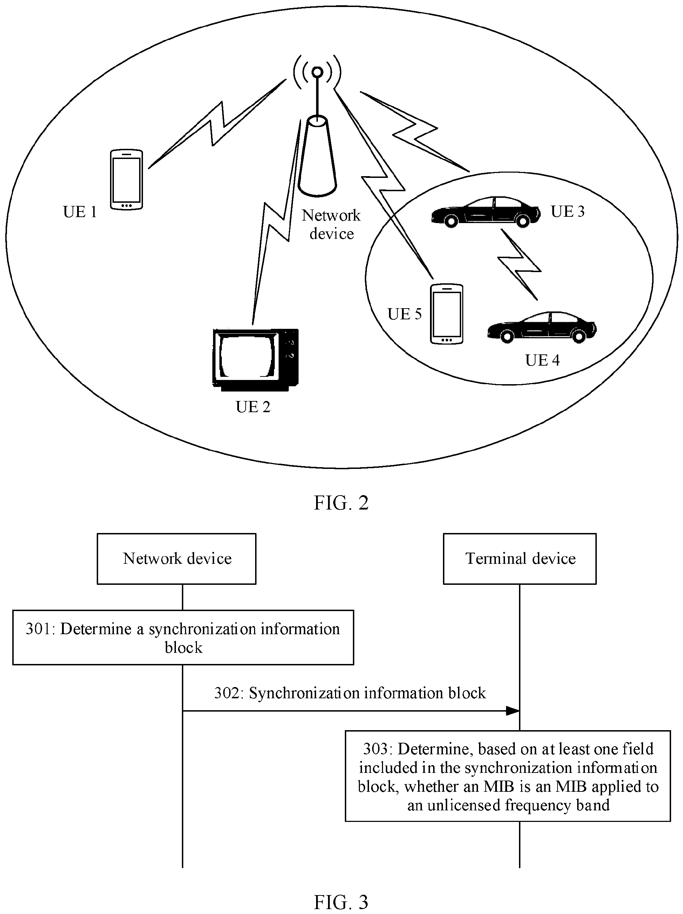

FIG. 2 shows an architecture of a possible communications system to which an MIB determining method provided in an embodiment of this application is applicable. The communications system operates on a shared frequency band of U6 GHz (6425 MHz to 7125 MHz) and 52.6 GHz to 71 GHz. The architecture of the communications system may include one network device and a plurality of terminal devices. For example, the plurality of terminal devices are shown as user equipment (user equipment, UE) 1 to UE 5 in FIG. 2. Specifically, the network device may communicate with the UE 1 to the UE 5. A communications link includes an uplink, a downlink, and a sidelink (side-link, SL), and information transmitted on the communications link includes actually transmitted data information and control information used to indicate or schedule actual data. In addition, the UE 3 to the UE 5 may also form a communications subsystem, and the UE 3 and the UE 4 may perform sidelink transmission based on a D2D technology.

The network device is a device having a wireless transceiver function or a chip that may be disposed in the network device. The network device includes but is not limited to a base station (gNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), or an access point (access point, AP), a wireless relay node, a wireless backhaul node, a transmission point (transmission and reception point, TRP or transmission point, TP), or the like in a wireless fidelity (wireless fidelity, WIFI) system, or may be a network node constituting a gNB or a transmission point, for example, a baseband unit (BBU) or a distributed unit (distributed unit, DU).

The terminal device may also be referred to as UE, an access terminal, a subscriber unit, a subscriber station, a mobile station, a mobile console, a remote station, a remote terminal, a mobile device, a user terminal, a terminal, a wireless communications device, a user agent, or a user apparatus. In this embodiment of this application, the terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. Application scenarios are not limited in embodiments of this application. In this application, a terminal device having a wireless transceiver function and a chip that may be disposed in the terminal device are collectively referred to as a terminal device.

It should be noted that FIG. 1 is merely a schematic diagram, and a type of the communications system, and a quantity of devices included in the communications system, a type, or the like of the device are not specifically limited in this application.

An MIB determining method provided in an embodiment of this application is applicable to the communications system shown in FIG. 2, in other words, is applicable to a communications system that operates in a shared frequency band of U6 GHz (6425 MHz to 7125 MHz) and 52.6 GHz to 71 GHz. Referring to FIG. 3, a specific procedure of the method may include the following steps.

Step 301: A network device determines a synchronization information block, where at least one field included in the synchronization information block is used to indicate whether an MIB is an MIB applied to an unlicensed frequency band, and the at least one field is located in the MIB.

Step 302: The network device sends the synchronization information block to a terminal device.

Step 303: The terminal device determines, based on the at least one field included in the synchronization information block, whether the MIB is an MIB applied to the unlicensed frequency band.

In this application, there may be the following three explanations for whether the MIB is an MIB applied to the unlicensed frequency band: Whether the MIB is an MIB applied to the unlicensed frequency band indicates only whether the MIB is an MIB applied to the unlicensed frequency band; indicates only whether the MIB is an MIB applied to a licensed frequency band; or indicates whether the MIB is an MIB applied to the unlicensed frequency band or an MIB applied to a licensed frequency band.

According to the method, the terminal device may determine, based on the at least one field in the synchronization information block, whether the received MIB is an MIB applied to the unlicensed frequency band.

In an optional implementation, an existing unused field, namely, a spare (spare) field, in the MIB may be used to indicate whether the MIB is an MIB applied to the unlicensed frequency band. In an embodiment, when the spare field is empty, it indicates that the MIB is an MIB applied to the licensed frequency band; or when the spare field is not empty, it indicates that the MIB is an MIB applied to the licensed frequency band. In another embodiment, the spare field includes 1 bit (bit), and may provide an indication by using a bit (bit mapping). A specific method may be as follows: When the 1 bit in the spare field is 0, the MIB is an MIB applied to the unlicensed frequency band, and when the 1 bit in the spare field is not 0, the MIB is an MIB applied to the licensed frequency band. In this case, when the 1 bit is 1 or when the 1 bit is empty, the MIB is an MIB applied to the licensed frequency band.

Alternatively, when the 1 bit in the spare field is 1, the MIB is an MIB applied to the unlicensed frequency band, and when the 1 bit in the spare field is not 1, the MIB is an MIB applied to the licensed frequency band. In this case, when the 1 bit is 0 or when the 1 bit is empty, the MIB is an MIB applied to the licensed frequency band.

According to the method, the terminal device may determine, based on whether the detected spare field is empty or based on a specific value of the detected spare field, whether the received MIB is an MIB applied to the unlicensed frequency band.

In another optional implementation, an existing field, namely, a demodulation reference signal type A position (dmrs-Type A-Position) field, in the MIB may be used to indicate whether the MIB is an MIB applied to the unlicensed frequency band. This field indicates a time domain position of a first DMRS on a downlink (downlink) or an uplink (uplink). Herein, "pos2" indicates that a first DMRS in a slot (slot) is located on a third OFDM symbol (OFDM symbol #2), and "pos3" indicates that a first DMRS in a slot is located on a fourth OFDM symbol (OFDM symbol #3). However, a terminal device operating on U6 GHz considers by default that the time domain position of the first DMRS is "pos2" or "pos3" . In this case, the dmrs-Type A-Position field may be omitted. Therefore, the dmrs-Type A-Position field may be used to indicate whether the MIB is an MIB applied to the unlicensed frequency band.

In an embodiment, when the dmrs-Type A-Position field is empty, it indicates that the MIB is an MIB applied to the licensed frequency band; or when the dmrs-Type A-Position field is not empty, it indicates that the MIB is an MIB applied to the licensed frequency band. In another embodiment, the dmrs-Type A-Position field includes 1 bit, and may provide an indication through bit-mapping. A specific method may be as follows:

When the 1 bit in the dmrs-Type A-Position field is 0, the MIB is an MIB applied to the unlicensed frequency band, and when the 1 bit in the dmrs-Type A-Position field is not 0, the MIB is an MIB applied to the licensed frequency band. In this case, when the 1 bit is 1 or when the 1 bit is empty, the MIB is an MIB applied to the licensed frequency band.

Alternatively, when the 1 bit in the dmrs-Type A-Position field is 1, the MIB is an MIB applied to the unlicensed frequency band, and when the 1 bit in the dmrs-Type A-Position field is not 1, the MIB is an MIB applied to the licensed frequency band. In this case, when the 1 bit is 0 or when the 1 bit is empty, the MIB is an MIB applied to the licensed frequency band.

According to the method, the terminal device may determine, based on whether the detected dmrs-Type A-Position field is empty or based on a specific value of the detected dmrs-Type A-Position field, whether the received MIB is an MIB applied to the unlicensed frequency band.

In still another optional implementation, an existing field, namely, a synchronization signal subcarrier offset (ssb-SubcarrierOffset) field, in the MIB may be used to indicate whether the MIB is an MIB applied to the unlicensed frequency band. This field indicates a subcarrier offset, namely, Kssb, between an SS/PBCH block and an overlapping CRB. For an FR 1, when a value of Kssb obtained by the terminal device through demodulation is greater than 24, it indicates that a current SS/PBCH block detected by the terminal device does not include RMSI information that has a QCL relationship with the current SS/PBCH block. However, in addition, the value may not be provided to the terminal device, and the terminal device derives Kssb based on a frequency domain position of the SS/PBCH block and a frequency domain position of a point A. The point A corresponds to a center point of a carrier #0 (a carrier with a number 0) of a CRB #0 (a CRB with a number 0). Therefore, for a system that operates on U6 GHZ and 52.6 GHz to 71 GHz, the ssb-SubcarrierOffset field in the MIB may be used to indicate whether the MIB is an MIB applied to the unlicensed frequency band.

In an embodiment, when the ssb-SubcarrierOffset field is empty, it indicates that the MIB is an MIB applied to the licensed frequency band; or when the ssb-SubcarrierOffset field is not empty, it indicates that the MIB is an MIB applied to the licensed frequency band. In another embodiment, the ssb-SubcarrierOffset field includes 4 bits. Specifically, that the ssb-SubcarrierOffset field is used indicate whether the MIB is an MIB applied to the unlicensed frequency band may be implemented in the following four manners:

Manner a1: A least significant bit (1-bit LSB) in the 4 bits included in the ssb-SubcarrierOffset field is used to indicate whether the MIB is an MIB applied to the unlicensed frequency band.

Manner a2: A most significant bit (1-bit MSB) in the 4 bits included in the ssb-SubcarrierOffset field is used to indicate whether the MIB is an MIB applied to the unlicensed frequency band.

Manner a3: Any bit in the 4 bits included in the ssb-SubcarrierOffset field is used to indicate whether the MIB is an MIB applied to the unlicensed frequency band.

Manner a4: At least 2 bits in the 4 bits included in the ssb-SubcarrierOffset field are combined to indicate whether the MIB is an MIB applied to the unlicensed frequency band.

For example, in Manner a1 to Manner a3, when the least significant bit, the most significant bit, or the any bit is 0, the MIB is an MIB applied to the unlicensed frequency band, and when the least significant bit, the most significant bit, or the any bit is not 0, the MIB is an MIB applied to the licensed frequency band. In this case, when the least significant bit, the most significant bit, or the any bit is 1 or when the least significant bit, the most significant bit, or the any bit is empty, the MIB is an MIB applied to the licensed frequency band.

Alternatively, when the least significant bit, the most significant bit, or the any bit is 1, the MIB is an MIB applied to the unlicensed frequency band, and when the least significant bit, the most significant bit, or the any bit is not 1, the MIB is an MIB applied to the licensed frequency band. In this case, when the least significant bit, the most significant bit, or the any bit is 0 or when the least significant bit, the most significant bit, or the any bit is empty, the MIB is an MIB applied to the licensed frequency band.

For example, in Manner a4, the at least 2 bits in the 4 bits included in the ssb-SubcarrierOffset field are combined to indicate whether the MIB is an MIB applied to the unlicensed frequency band. A specific method may be as follows: Different values including the at least 2 bits in the ssb-SubcarrierOffset field is used to indicate whether the MIB is an MIB applied to the unlicensed frequency band. For example, when the at least 2 bits in the ssb-SubcarrierOffset field are "01", the MIB is an MIB applied to the unlicensed frequency band, and when the at least 2 bits in the ssb-SubcarrierOffset field are not "01", the MIB is an MIB applied to the licensed frequency band. In this case, when the at least 2 bits are "00", " 10", or "11" or when the at least 2 bits are empty, the MIB is an MIB applied to the licensed frequency band. For another example, when the at least 2 bits in the ssb-SubcarrierOffset field are " 10", the MIB is an MIB applied to the unlicensed frequency band, and when the at least 2 bits in the ssb-SubcarrierOffset field are not " 10", the MIB is an MIB applied to the licensed frequency band. In this case, when the at least 2 bits are "01", "00", or "11" or when the at least 2 bits are empty, the MIB is an MIB applied to the licensed frequency band. For another example, when 3 bits in the ssb-SubcarrierOffset field are "001", the MIB is an MIB applied to the unlicensed frequency band, and when the 3 bits in the ssb-SubcarrierOffset field are not "001", the MIB is an MIB applied to the licensed frequency band. In this case, when the 3 bits are "010", "000", or " 111" or when the 3 bits are empty, the MIB is an MIB applied to the licensed frequency band. The 2 bits or the 3 bits may be consecutive bits in the 4 bits included in the ssb-SubcarrierOffset field, or may be inconsecutive bits. This is not limited in this application. Certainly, in addition to the examples, there may be a plurality of other indication methods. The other indication methods are not listed herein one by one.

According to the method, the terminal device may determine, based on whether the detected ssb-SubcarrierOffset field is empty or based on a specific value of the detected ssb-SubcarrierOffset field, whether the received MIB is an MIB applied to the unlicensed frequency band.

In yet another optional implementation, the at least one field may include at least two fields in the spare field, the dmrs-Type A-Position field, or the ssb-SubcarrierOffset field. In an embodiment, when the at least two fields are empty, it indicates that the MIB is an MIB applied to the licensed frequency band, or when the at least two fields are not empty, it indicates that the MIB is an MIB applied to the licensed frequency band. In another embodiment, bits included in the at least two fields are combined to indicate whether the MIB is an MIB applied to the unlicensed frequency band.

For example, when the bits included in the at least two fields are combined to indicate whether the MIB is an MIB applied to the unlicensed frequency band, details may be as follows: 2 bits in the spare field and the dmrs-Type A-Position field are combined to indicate whether the MIB is an MIB applied to the unlicensed frequency band; or at least 2 bits in the spare field and the ssb-SubcarrierOffset field are combined to indicate whether the MIB is an MIB applied to the unlicensed frequency band; or at least 2 bits in the dmrs-Type A-Position field and the ssb-SubcarrierOffset field are combined to indicate whether the MIB is an MIB applied to the unlicensed frequency band; or at least 3 bits in the spare field, the dmrs-Type A-Position field, and the ssb-SubcarrierOffset field are combined to indicate whether the MIB is an MIB applied to the unlicensed frequency band. Specifically, in any one of the combination-based indication methods, a specific value of combined bits is used to indicate whether the MIB is an MIB applied to the unlicensed frequency band. For example, when 2 bits in the spare field and the dmrs-Type A-Position field are combined to indicate whether the MIB is an MIB applied to the unlicensed frequency band, when the 2 bits are "01", the MIB is an MIB applied to the unlicensed frequency band, and when the 2 bits are not "01", the MIB is an MIB applied to the licensed frequency band. In this case, when the 2 bits are "01", "00", or "11" or when the 2 bits are empty, the MIB is an MIB applied to the licensed frequency band. Certainly, there may be a plurality of other examples. The other examples are not listed herein one by one.

According to the MIB determining method provided in this embodiment of this application, the terminal device may determine, based on a field in the synchronization information block, whether the received MIB is an MIB applied to the unlicensed frequency band.

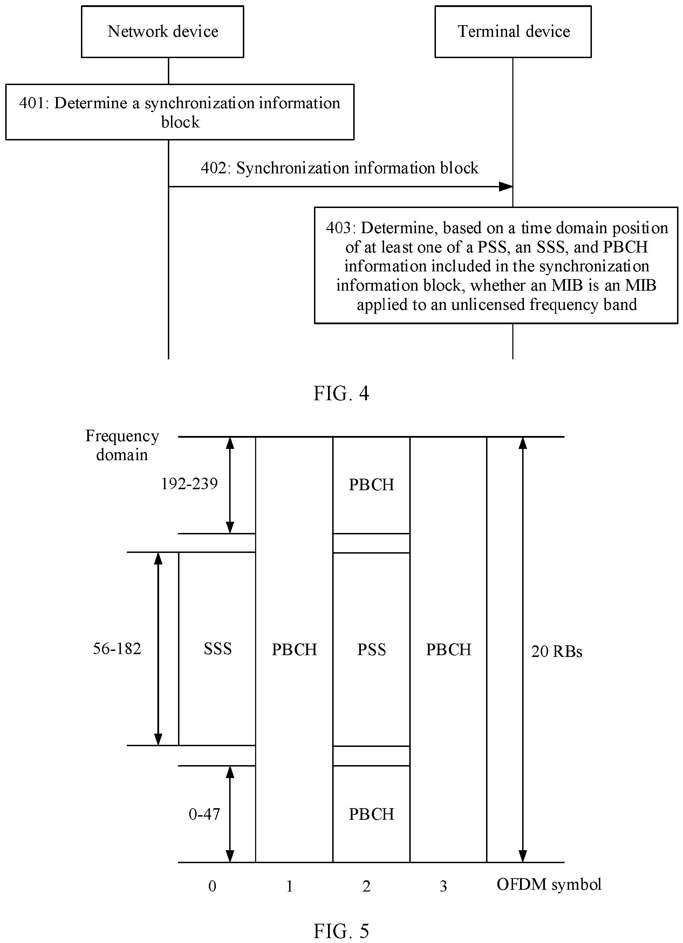

Based on the foregoing embodiment, an MIB determining method further provided in an embodiment of this application is applicable to the communications system shown in FIG. 2, in other words, is applicable to a communications system that operates in a shared frequency band of U6 GHz (6425 MHz to 7125 MHz) and 52.6 GHz to 71 GHz. Referring to FIG. 4, a specific procedure of the method may include the following steps.

Step 401: A network device determines a synchronization information block, where a time domain position of at least one of a PSS, an SSS, and PBCH information included in the synchronization information block is used to indicate whether an MIB included in the synchronization information block is an MIB applied to an unlicensed frequency band.

Step 402: The network device sends the synchronization information block to a terminal device.

Step 403: The terminal device determines, based on the time domain position of the at least one of the PSS, the SSS, and the PBCH information included in the synchronization information block, whether the MIB is an MIB applied to the unlicensed frequency band.

According to the method, the terminal device determines, based on the time domain position of the at least one of the PSS, the SSS, and the PBCH information included in the synchronization information block, whether the received MIB is an MIB applied to the unlicensed frequency band.

In a first optional implementation, a time domain position of at least one of the PSS and the SSS may be used to indicate whether the MIB included in the synchronization information block is an MIB applied to the unlicensed frequency band.

It can be learned, based on the structure of the synchronization information block shown in FIG. 1, that the synchronization information block currently includes the PSS, the SSS, and a PBCH. The PSS and the SSS are respectively located on a first OFDM symbol (OFDM symbol #0) and a third OFDM symbol (OFDM symbol #2) of the synchronization information block, and subcarrier sequence numbers of a total of 127 occupied subcarriers of the synchronization information block are {56, 57, 182...} (namely, subcarrier sequence numbers #56 to #182). Certainly, the subcarrier sequence number may also be referred to as a subcarrier number This is not limited in this application.

Currently, a binary phase shift keying (binary phase shift keying, BPSK) modulation-based M sequence whose length is 127 is used for each of the PSS and the SSS. The PSS is generated by performing three cyclic shifts on the BPSK-based M sequence. Specifically, a formula for generating a PSS sequence is as follows:

$$d_{PSS}(n)=1-2x(m).$$

Herein,

$$m=(n+43N_{ID}^{(2)})\bmod 127;$$

$$0 \leq n < 127;$$

$$x(i+7) = (x(i+4)+x(i))\bmod 2;$$

and

$$[x(6)x(5)x(4)x(3)x(2)x(1)] = [1\ 1\ 1\ 0\ 1\ 1\ 0].$$

Herein, $d_{PSS}(n)$ is the PSS sequence, $N_{ID}^{(2)} \in \{0,\ 1,\ 2\}$, x(i) indicates a base sequence, i indicates a number, and i is greater than or equal to 1.

A formula for generating an SSS sequence is as follows:

$$d_{SSS}(n)=[1-2x_0((n+m_0)\bmod 127)][1-2x_1((n+m_1)\bmod 127)].$$

Herein,

$$m_0=15\left\lfloor\frac{N_{ID}^{(1)}}{112}\right\rfloor+5N_{ID}^{(2)};$$

$$m_1=N_{ID}^{(1)}\bmod 112;$$

$$0 \leq n < 127;$$

$$x_0(i+7)=(x_0(i+4)+x_0(i))\bmod 2;$$

$$x_1(i+7)=(x_1(i+4)+x_1(i))\bmod 2;$$

$$[x_0(6)x_0(5)x_0(4)x_0(3)x_0(2)x_0(1)]=[0\ 0\ 0\ 0\ 0\ 1];$$

and

$$[x_1(6)x_1(5)x_1(4)x_1(3)x_1(2)x_1(1)]=[0\ 0\ 0\ 0\ 0\ 1].$$

Herein, $d_{SSS}(n)$ is the SSS sequence, $N_{ID}^{(1)} \in \{0, 1, \ldots, 335\}$, $x_0(i)$ and $x_1(i)$ each indicate a base sequence, and i indicates a number.

It can be learned from generation of the PSS sequence and the SSS sequence that the PSS sequence and the SSS sequence are different. Therefore, in the first optional implementation, time domain positions (or relative positions) of the PSS and the SSS in the synchronization information block may be exchanged to indicate whether the MIB included in the synchronization information block is an MIB applied to the unlicensed frequency band. Specifically, in the first optional implementation, a structure of the synchronization information block may be shown in FIG. 5. It can be learned, by comparing the synchronization information block shown in FIG. 5 and the synchronization information block shown in FIG. 1, that the time domain positions of the PSS and the SSS in FIG. 5 are exchanged relative to those in FIG. 1. After the exchange, a time domain position of the PSS is the third OFDM symbol (namely, the OFDM symbol #0) of the synchronization information block, and a time domain position of the SSS is the first OFDM symbol (namely, the OFDM symbol #2) of the synchronization information block. In addition, it can be learned that the frequency domain positions of the PSS and the SSS remain unchanged after the exchange, and are still subcarriers whose subcarrier sequence numbers are {56, 57, ..., 182} on the synchronization information block. Correspondingly, some parameters in table 7.4.3.1-1 in TS 38.211 that correspond to the synchronization information block shown in FIG. 5 may be shown in Table 1:

**Table 1**

| Channel or signal (Channel or signal) | OFDM symbol sequence number (OFDM symbol number *l*) relative to a start of a synchronization information block (relative to the start of an SS/PBCH block) | Subcarrier sequence number (Subcarrier number k) relative to the start of an SS/PBCH block |
|---|---|---|
| PSS | ***2*** | 56, 57, ... , 182 |
| SSS | ***0*** | 56, 57, ... , 182 |
| Set to 0 | 0 | 0, 1, ... , 55, 183, 184, ... , 239 |
|  | 2 | 48, 49, ... , 55, 183, 184, ... , 191 |
| PBCH | 1, 3 | 0, 1, ... , 239 |
|  | 2 | 0, 1, ...,47, 192, 193, ... , 239 |
| DM-RS for PBCH | 1, 3 | $0 + v, 4 + v, 8 + v, ...,236+v$ |
|  | 2 | $0 + v, 4 + v, 8 + v, ...,44 + v$ $192 + v, 196 + v, ...,236+v$ |

Bold and italic data in Table 1 shows a modification to a corresponding parameter relative to the synchronization information block shown in FIG. 1, namely, a modification to the time domain positions of the PSS and the SSS.
Specifically, in the first optional implementation, that the time domain position of the at least one of the PSS and the SSS is used to indicate whether the MIB included in the synchronization information block is an MIB applied to the unlicensed frequency band may specifically include the following cases:
When the PSS is located on the first OFDM symbol of the synchronization information block, the MIB is an MIB applied to the unlicensed frequency band, and when the PSS is not located on the first OFDM symbol of the synchronization information block, the MIB is an MIB applied to a licensed frequency band. In this case, when the PSS is located on the third OFDM symbol of the synchronization information block, the MIB is an MIB applied to the licensed frequency band.

Alternatively, when the PSS is located on the third OFDM symbol of the synchronization information block, the MIB is an MIB applied to the unlicensed frequency band, and when the PSS is not located on the third OFDM symbol of the synchronization information block, the MIB is an MIB applied to a licensed frequency band. In this case, when the PSS is located on the first OFDM symbol of the synchronization information block, the MIB is an MIB applied to the licensed frequency band.

Alternatively, when the SSS is located on the third OFDM symbol of the synchronization information block, the MIB is an MIB applied to the unlicensed frequency band, and when the SSS is not located on the third OFDM symbol of the synchronization information block, the MIB is an MIB applied to a licensed frequency band. In this case, when the SSS is located on the first OFDM symbol of the synchronization information block, the MIB is an MIB applied to the licensed frequency band.

Alternatively, when the SSS is located on the first OFDM symbol of the synchronization information block, the MIB is an MIB applied to the unlicensed frequency band, and when the SSS is not located on the first OFDM symbol of the synchronization information block, the MIB is an MIB applied to a licensed frequency band. In this case, when the SSS is located on the third OFDM symbol of the synchronization information block, the MIB is an MIB applied to the licensed frequency band.

Alternatively, when the PSS is located on the first OFDM symbol of the synchronization information block and the SSS is located on the third OFDM symbol of the synchronization information block, the MIB is an MIB applied to the unlicensed frequency band, and when the PSS is not located on the first OFDM symbol of the synchronization information block and the SSS is not located on the third OFDM symbol of the synchronization information block, the MIB is an MIB applied to a licensed frequency band. In this case, when the PSS is located on the third OFDM symbol of the synchronization information block and the SSS is located on the first OFDM symbol of the synchronization information block, the MIB is an MIB applied to the licensed frequency band.

Alternatively, when the PSS is located on the third OFDM symbol of the synchronization information block and the SSS is located on the first OFDM symbol of the synchronization information block, the MIB is an MIB applied to the unlicensed frequency band, and when the PSS is not located on the third OFDM symbol of the synchronization information block and the SSS is not located on the first OFDM symbol of the synchronization information block, the MIB is an MIB applied to a licensed frequency band. In this case, when the PSS is located on the first OFDM symbol of the synchronization information block and the SSS is located on the third OFDM symbol of the synchronization information block, the MIB is an MIB applied to the licensed frequency band.

In the first optional implementation, when detecting any one of the cases in a process of demodulating the synchronization information block (for example, an auto-correlative processing method), the terminal device may determine whether the received MIB is an MIB applied to the unlicensed frequency band. For example, when the terminal device determines the MIB through comparison and demodulation in a specified position, there may be the following cases:

The terminal device performs comparison or demodulation on subcarriers whose subcarrier sequence numbers are #56 to #182 on the OFDM symbol #0 by using the PSS sequence. If the PSS signal is obtained through demodulation, it indicates that the MIB is an MIB applied to the licensed frequency band, and if the PSS signal is not obtained through demodulation, it indicates that the MIB is an MIB applied to the unlicensed frequency band; or if the PSS signal is obtained through demodulation, it indicates that the MIB is an MIB applied to the unlicensed frequency band, and if the PSS signal is not obtained through demodulation, it indicates that the MIB is an MIB applied to the licensed frequency band.

Alternatively, the terminal device performs comparison or demodulation on subcarriers whose subcarrier sequence numbers are #56 to #182 on the OFDM symbol #2 by using the SSS sequence. If the SSS signal is obtained through demodulation, it indicates that the MIB is an MIB applied to the licensed frequency band, and if the SSS signal is not obtained through demodulation, it indicates that the MIB is an MIB applied to the unlicensed frequency band; or if the SSS signal is obtained through demodulation, it indicates that the MIB is an MIB applied to the unlicensed frequency band, and if the SSS signal is not obtained through demodulation, it indicates that the MIB is an MIB applied to the licensed frequency band.

Alternatively, the terminal device separately performs comparison or demodulation on subcarriers whose subcarrier sequence numbers are #56 to #182 on the OFDM symbol #0 and the OFDM symbol #2 by using the PSS sequence and the SSS sequence. If the PSS signal and the SSS signal are separately obtained through demodulation, it indicates that the MIB is an MIB applied to the licensed frequency band, and if the PSS signal and the SSS signal are not separately obtained through demodulation, it indicates that the MIB is an MIB applied to the unlicensed frequency band; or if the PSS signal and the SSS signal are separately obtained through demodulation, it indicates that the MIB is an MIB applied to the unlicensed frequency band, and if the PSS signal and the SSS signal are not separately obtained through demodulation, it indicates that the MIB is an MIB applied to the licensed frequency band.

In a second optional implementation, a time domain position of the PBCH information may be used to indicate whether the MIB included in the synchronization information block is an MIB applied to the unlicensed frequency band.

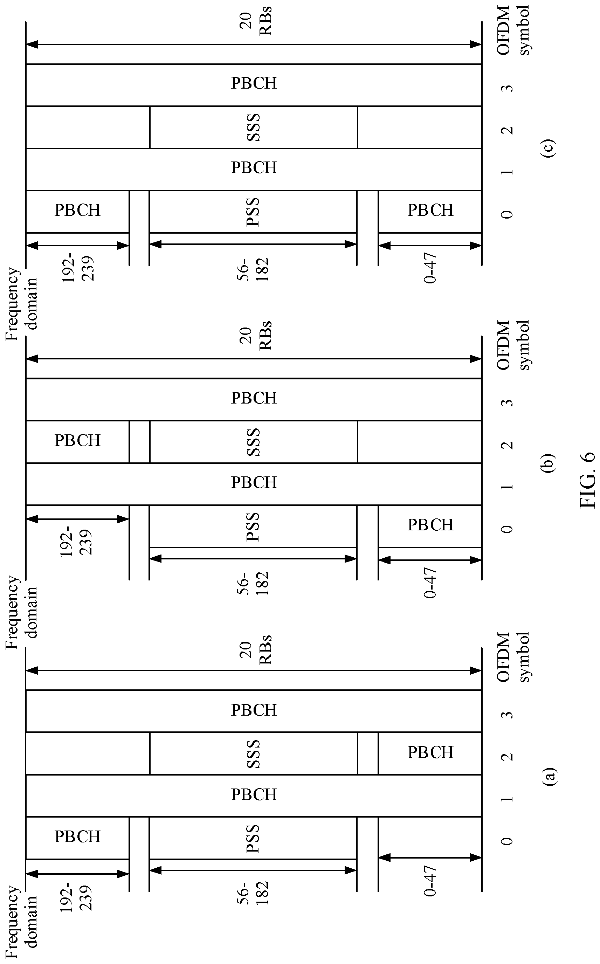

It can be learned, based on the structure of the synchronization information block shown in FIG. 1, that currently, a time domain position of a PBCH in the synchronization information block occupies 240 subcarriers on each of a second OFDM symbol (namely, an OFDM symbol #1) and a fourth OFDM symbol (namely, an OFDM symbol #3) of the synchronization information block, and occupies a total of 96 subcarriers (including subcarriers corresponding to subcarrier sequence numbers #0 to #47 and subcarrier sequence numbers #192 to #239) on a third OFDM symbol (namely, an OFDM symbol #2). In the second optional implementation, a time domain position of the PBCH on the third OFDM symbol of the synchronization information block may be changed to indicate whether the MIB included in the synchronization information block is an MIB applied to the unlicensed frequency band. Specifically, a structure of a synchronization information block obtained after the time domain position of the PBCH changes may be shown in FIG. 6.

There are three possible cases in FIG. 6. It can be learned, by comparing a synchronization information block shown in (a) in FIG. 6 and the synchronization information block shown in FIG. 1, that some PBCH information is included on subcarriers whose subcarrier sequence numbers are {192, 193, ..., 239} on a first OFDM symbol of the synchronization information block shown in (a) in FIG. 6, and some PBCH information is included on subcarriers whose subcarrier sequence numbers are {0, 1, ..., 47} on a third OFDM symbol of the synchronization information block. Correspondingly, some parameters in table 7.4.3.1-1 in TS 38.211 that correspond to the synchronization information block shown in (a) in FIG. 6 may be shown in Table 2:

**Table 2**

| Channel or signal | OFDM symbol number $l$ relative to the start of an SS/PBCH block | Subcarrier number $k$ relative to the start of an SS/PBCH block |
|---|---|---|
| PSS | 0 | 56, 57, ... , 182 |
| SSS | 2 | 56, 57, ... , 182 |
| Set to 0 | 0 | *0,1, ..., 55, 183, 184, ..., 191* |
|  | 2 | *48, 49, ..., 55, 183, 184, ..., 239* |
| PBCH | 1, 3 | 0, 1, ... , 239 |
|  | *0* | *192, 193, ..., 239* |
|  | *2* | *0,1, ...,47* |
| DM-RS for PBCH | 1, 3 | $0 + v, 4 + v, 8 + v, ..., 236 + v$ |
|  | *0* | *192+v, 196+v, ..., 236+v* |
|  | *2* | *0+v, 4+v, 8+v, ..., 44+v* |

Bold and italic data in Table 2 shows a modification to a corresponding parameter relative to the synchronization information block shown in FIG. 1. Specifically, it can be learned from Table 2 that PBCH information on the first OFDM symbol and the third OFDM symbol of the synchronization information block changes. In other words, after the change, some PBCH information is included on subcarriers whose subcarrier sequence numbers are {192, 193, ..., 239} on the first OFDM symbol of the synchronization information block, and some PBCH information is included on subcarriers whose subcarrier sequence numbers are {0, 1, ..., 47} on the third OFDM symbol of the synchronization information block. Because the PDCH includes a DMRS, a time domain position of the DMRS on the correspondingly modified PBCH also changes. After the change, some DMRSs are included on subcarriers whose subcarrier sequence numbers are {192+v, 196+v, ..., 236+v} on the first OFDM symbol of the synchronization information block, and some DMRSs are included on subcarriers whose subcarrier sequence number are {0+v, 4+v, ..., 44+v} on the third OFDM symbol of the synchronization information block. Correspondingly, after the position of the PBCH changes, a position in which no information is included also changes correspondingly. A specific change is shown by data corresponding to Set to 0 in Table 2. In other words, after the change, no information is included on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184, ..., 239} on the third OFDM symbol of the synchronization information block.

It can be learned, by comparing a synchronization information block shown in (b) in FIG. 6 and the synchronization information block shown in FIG. 1, that some PBCH information is included on subcarriers whose subcarrier sequence numbers are {0, 1, ..., 47} on a first OFDM symbol of the synchronization information block shown in (b) in FIG. 6, and some PBCH information is included on subcarriers whose subcarrier sequence numbers are {192, 193, ..., 239} on a third OFDM symbol of the synchronization information block. Correspondingly, some parameters in table 7.4.3.1-1 in TS 38.211 that correspond to the synchronization information block shown in (b) in FIG. 6 may be shown in Table 3:

**Table 3**

| Channel or signal | OFDM symbol number *l* relative to the start of an SS/PBCH block | Subcarrier number *k* relative to the start of an SS/PBCH block |
|---|---|---|
| PSS | 0 | 56, 57, ... , 182 |
| SSS | 2 | 56, 57, ... , 182 |
| Set to 0 | 0 | *48, 49, ..., 55, 183, 184, ..., 239* |
| | 2 | *0,1, ..., 55, 183, 184, ..., 191* |
| PBCH | 1, 3 | 0, 1, ... , 239 |
| | *0* | *0,1, ...,47* |
| | *2* | *192, 193, ..., 239* |
| DM-RS for PBCH | 1, 3 | 0 + *v*,4 + *v*,8 + *v*, ..., 236 + *v* |
| | *0* | *0+v, 4+v, 8+v, ..., 44+v* |
| | *2* | *192+v, 196+v, ..., 236+v* |

Bold and italic data in Table 3 shows a modification to a corresponding parameter relative to the synchronization information block shown in FIG. 1. Specifically, it can be learned from Table 3 that PBCH information on the first OFDM symbol and the third OFDM symbol of the synchronization information block changes. In other words, after the change, some PBCH information is included on subcarriers whose subcarrier sequence numbers are {0, 1, ..., 47} on the first OFDM symbol of the synchronization information block, and some PBCH information is included on subcarriers whose subcarrier sequence numbers are {192, 193, ..., 239} on the third OFDM symbol of the synchronization information block. Because the PDCH includes a DMRS, a time domain position of the DMRS on the correspondingly modified PBCH also changes. In other words, after the change, some DMRSs are included on subcarriers whose subcarrier sequence numbers are {0+v, 4+v, ..., 44+v} on the first OFDM symbol of the synchronization information block, and some DMRSs are included on subcarriers whose subcarrier sequence number are {192+v, 196+v, ..., 236+v} on the third OFDM symbol of the synchronization information block. Correspondingly, after the position of the PBCH changes, a position in which no information is included also changes correspondingly. A specific change is shown by data corresponding to Set to 0 in Table 3. In other words, after the change, no information is included on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block.

It can be learned, by comparing a synchronization information block shown in (c) in FIG. 6 and the synchronization information block shown in FIG. 1, that some PBCH information is included on subcarriers whose subcarrier sequence numbers are {0, 1, ..., 47} on a first OFDM symbol of the synchronization information block shown in (c) in FIG. 6, and some PBCH information is included on subcarriers whose subcarrier sequence numbers are {192, 193, ..., 239} on the first OFDM symbol of the synchronization information block. Correspondingly, some parameters in table 7.4.3.1-1 in TS 38.211 that correspond to the synchronization information block shown in (c) in FIG. 6 may be shown in Table 4:

**Table 4**

| Channel or signal | OFDM symbol number *l* relative to the start of an SS/PBCH block | Subcarrier number *k* relative to the start of an SS/PBCH block |
|---|---|---|
| PSS | 0 | 56, 57, ... , 182 |
| SSS | 2 | 56, 57, ... , 182 |
| Set to 0 | 0 | *48,49, ..., 55, 183, 184, ..., 192* |
| | 2 | *0, 1, ..., 55, 183, 184, ..., 239* |
| PBCH | 1, 3 | 0, 1, ..., 239 |
| | *0* | *0, 1, ..., 47, 192, 193, ..., 239* |

(continued)

| Channel or signal | OFDM symbol number *l* relative to the start of an SS/PBCH block | Subcarrier number *k* relative to the start of an SS/PBCH block |
|---|---|---|
| DM-RS for PBCH | 1, 3 | 0 + *v*,4 + *v*,8 + *v*, ..., 236 + *v* |
| | *0* | *0+v, 4+v, 8+v, ..., 44+v, 192+v, 196+v, ..., 236+v* |

Bold and italic data in Table 4 shows a modification to a corresponding parameter relative to the synchronization information block shown in FIG. 1. Specifically, it can be learned from Table 4 that PBCH information on the first OFDM symbol of the synchronization information block changes. In other words, after the change, some PBCH information is included on subcarriers whose subcarrier sequence numbers are {0, 1, ..., 47} on the first OFDM symbol of the synchronization information block, and some PBCH information is included on subcarriers whose subcarrier sequence numbers are {192, 193, ..., 239} on the first OFDM symbol of the synchronization information block. Because the PDCH includes a DMRS, a time domain position of the DMRS on the correspondingly modified PBCH also changes. In other words, after the change, some DMRSs are included on subcarriers whose subcarrier sequence numbers are {0+v, 4+v, ..., 44+v} on the first OFDM symbol of the synchronization information block, and some DMRSs are included on subcarriers whose subcarrier sequence number are {192+v, 196+v, ..., 236+v} on the first OFDM symbol of the synchronization information block. Correspondingly, after the position of the PBCH changes, a position in which no information is included also changes correspondingly. A specific change is shown by data corresponding to Set to 0 in Table 4. In other words, after the change, no information is included on subcarriers whose subcarrier sequence numbers are {48, 49, ..., 55} and subcarriers whose subcarrier sequence numbers are {183, 184, ..., 192} on the first OFDM symbol of the synchronization information block, and no information is included on subcarriers whose subcarrier sequence numbers are {0, 1, ..., 55} and subcarriers whose subcarrier sequence numbers are {183, 184, ..., 239} on a third OFDM symbol of the synchronization information block.

In Table 2 to Table 4, $v = N_{ID}^{cell} \bmod 4$ , and $N_{ID}^{cell}$ is a cell identifier.

Specifically, in the second optional implementation, based on descriptions of FIG. 6 and Table 2 to Table 4, that the time domain position of the PBCH information is used to indicate whether the MIB included in the synchronization information block is an MIB applied to the unlicensed frequency band may specifically include the following methods:

Method b1: When first PBCH information is located in a first frequency domain position on the first OFDM symbol of the synchronization information block, and/or second PBCH information is located in a second frequency domain position on the first OFDM symbol of the synchronization information block, the MIB is an MIB applied to the unlicensed frequency band, and when the first PBCH information is not located in the first frequency domain position on the first OFDM symbol of the synchronization information block, and/or the second PBCH information is not located in the second frequency domain position on the first OFDM symbol of the synchronization information block, the MIB is an MIB applied to the licensed frequency band. In this case, when the first PBCH information is located in a first frequency domain position on the third OFDM symbol of the synchronization information block, and the second PBCH information is located in a second frequency domain position on the third OFDM symbol of the synchronization information block, the MIB is an MIB applied to the licensed frequency band.

Method b2: When first PBCH information is located in a first frequency domain position on the third OFDM symbol of the synchronization information block, and second PBCH information is located in a second frequency domain position on the third OFDM symbol of the synchronization information block, the MIB is an MIB applied to the unlicensed frequency band, and when the first PBCH information is not located in the first frequency domain position on the third OFDM symbol of the synchronization information block, and the second PBCH information is not located in the second frequency domain position on the third OFDM symbol of the synchronization information block, the MIB is an MIB applied to the licensed frequency band. In this case, when the first PBCH information is located in a first frequency domain position on the first OFDM symbol of the synchronization information block, and/or the second PBCH information is located in a second frequency domain position on the first OFDM symbol of the synchronization information block, the MIB is an MIB applied to the licensed frequency band.

Method b3: When a first DMRS is located in a third frequency domain position on the first OFDM symbol of the synchronization information block, and/or a second DMRS is located in a fourth frequency domain position on the first OFDM symbol of the synchronization information block, the MIB is an MIB applied to the unlicensed frequency band, and when the first DMRS is not located in the third frequency domain position on the first OFDM symbol of the synchronization information block, and/or the second DMRS is not located in the fourth frequency domain position on the first OFDM symbol of the synchronization information block, the MIB is an MIB applied to the licensed frequency band. In this case, when the first DMRS is located in a third frequency domain position on the third OFDM symbol of the synchronization information block, and the second DMRS is located in a fourth frequency domain position on the third OFDM symbol of the synchronization information block, the MIB is an MIB applied to the licensed frequency band.

Method b4: When a first DMRS is located in a third frequency domain position on the third OFDM symbol of the synchronization information block, and a second DMRS is located in a fourth frequency domain position on the third OFDM symbol of the synchronization information block, the MIB is an MIB applied to the unlicensed frequency band, and when the first DMRS is not located in the third frequency domain position on the third OFDM symbol of the synchronization information block, and the second DMRS is not located in the fourth frequency domain position on the third OFDM symbol of the synchronization information block, the MIB is an MIB applied to the licensed frequency band. In this case, when the first DMRS is located in a third frequency domain position on the first OFDM symbol of the synchronization information block, and/or the second DMRS is located in a fourth frequency domain position on the first OFDM symbol of the synchronization information block, the MIB is an MIB applied to the licensed frequency band.

The first DMRS is included in the first PBCH information, and the second DMRS is included in the second PBCH information.

For example, the first frequency domain position includes subcarriers whose subcarrier sequence numbers are {0, 1, ..., 47} on the synchronization information block, and the second frequency domain position includes subcarriers whose subcarrier sequence numbers are {192, 193, ..., 239} on the synchronization information block; or the first frequency domain position includes subcarriers whose subcarrier sequence numbers are {192, 193, ..., 239} on the synchronization information block, and the second frequency domain position includes subcarriers whose subcarrier sequence numbers are {0, 1, ..., 47} on the synchronization information block.

For example, the third frequency domain position includes subcarriers whose subcarrier sequence numbers are {0+v, 4+v, ..., 44+v} on the synchronization information block, and the fourth frequency domain position includes subcarriers whose subcarrier sequence numbers are {192+v, 196+v, ..., 236+v} on the synchronization information block; or the first frequency domain position includes subcarriers whose subcarrier sequence numbers are {192+v, 196+v, ..., 236+v} on the synchronization information block, and the second frequency domain position includes subcarriers whose subcarrier sequence numbers are {0+v, 4+v, ..., 44+v} on the synchronization information block.

In the second optional implementation, in the method b1 and the method b2, the terminal device may blindly detect the PBCH, to indicate whether the MIB included in the synchronization information block is an MIB applied to the unlicensed frequency band. Specifically, the terminal device may determine, by performing energy detection on the PBCH channel at a specified position, whether the MIB included in the synchronization information block is an MIB applied to the unlicensed frequency band. In the method b3 and the method b4, the terminal device may blindly detect the DMRS, to indicate whether the MIB included in the synchronization information block is an MIB applied to the unlicensed frequency band. Specifically, the terminal device may determine, by performing energy detection on the DMRS on the PBCH channel at a specified position or by performing DMRS sequence comparison, whether the MIB included in the synchronization information block is an MIB applied to the unlicensed frequency band.

For example, that the terminal device may determine, by performing energy detection on the PBCH channel at the specified position, whether the MIB included in the synchronization information block is an MIB applied to the unlicensed frequency band may be specifically as follows:

The terminal device performs energy detection on subcarriers #1 to #47 on an OFDM symbol #0 and/or subcarriers #192 to #239 on the OFDM symbol #0. If the PBCH information is detected, it indicates that the MIB is an MIB applied to the licensed frequency band, and if the PBCH information is not detected, it indicates that the MIB is an MIB applied to the unlicensed frequency band; or if the PBCH information is detected, it indicates that the MIB is an MIB applied to the unlicensed frequency band, and if the PBCH information is not detected, it indicates that the MIB is an MIB applied to the licensed frequency band.

Alternatively, the terminal device simultaneously performs energy detection on subcarriers #1 to #47 on an OFDM symbol #2 and subcarriers #192 to #239 on the OFDM symbol #2. If the PBCH information is simultaneously detected on the subcarriers #1 to #47 on the OFDM symbol #2 and the subcarriers #192 to #239 on the OFDM symbol #2, it indicates that the MIB is an MIB applied to the licensed frequency band, and if the PBCH information is not simultaneously detected on the subcarriers #1 to #47 on the OFDM symbol #2 and the subcarriers #192 to #239 on the OFDM symbol #2, it indicates that the MIB is an MIB applied to the unlicensed frequency band; or if the PBCH information is simultaneously detected on the subcarriers #1 to #47 on the OFDM symbol #2 and the subcarriers #192 to #239 on the OFDM symbol #2, it indicates that the MIB is an MIB applied to the unlicensed frequency band, and if the PBCH information is not simultaneously detected on the subcarriers #1 to #47 on the OFDM symbol #2 and the subcarriers #192 to #239 on the OFDM symbol #2, it indicates that the MIB is an MIB applied to the licensed frequency band.

For example, that the terminal device may determine, by performing energy detection on the DMRS on the PBCH channel at the specified position or by performing DMRS sequence comparison, whether the MIB included in the synchronization information block is an MIB applied to the unlicensed frequency band may be specifically as follows:

The terminal device performs energy detection on subcarriers {0+v, 4+v, ..., 44+v} on an OFDM symbol #0 and/or subcarriers {192+v, 196+v, ..., 236+v} on the OFDM symbol #0. If the DMRS is detected, it indicates that the MIB is an MIB applied to the licensed frequency band, and if the DMRS is not detected, it indicates that the MIB is an MIB applied to the unlicensed frequency band; or if the DMRS is detected, it indicates that the MIB is an MIB applied to the unlicensed frequency band, and if the DMRS is not detected, it indicates that the MIB is an MIB applied to the licensed frequency band.

Alternatively, the terminal device simultaneously performs energy detection on subcarriers {0+v, 4+v, ..., 44+v} on an OFDM symbol #2 and subcarriers {192+v, 196+v, ..., 236+v} on the OFDM symbol #2. If the DMRS is simultaneously detected on the subcarriers {0+v, 4+v, ..., 44+v} on the OFDM symbol #2 and the subcarriers {192+v, 196+v, ..., 236+v} on the OFDM symbol #2, it indicates that the MIB is an MIB applied to the licensed frequency band, and if the DMRS is not simultaneously detected on the subcarriers {0+v, 4+v, ..., 44+v} on the OFDM symbol #2 and the subcarriers {192+v, 196+v, , 236+v} on the OFDM symbol #2, it indicates that the MIB is an MIB applied to the unlicensed frequency band; or if the DMRS is simultaneously detected on the subcarriers {0+v, 4+v, ..., 44+v} on the OFDM symbol #2 and the subcarriers {192+v, 196+v, ..., 236+v} on the OFDM symbol #2, it indicates that the MIB is an MIB applied to the unlicensed frequency band, and if the DMRS is not simultaneously detected on the subcarriers {0+v, 4+v, ..., 44+v} on the OFDM symbol #2 and the subcarriers {192+v, 196+v, ..., 236+v} on the OFDM symbol #2, it indicates that the MIB is an MIB applied to the licensed frequency band.

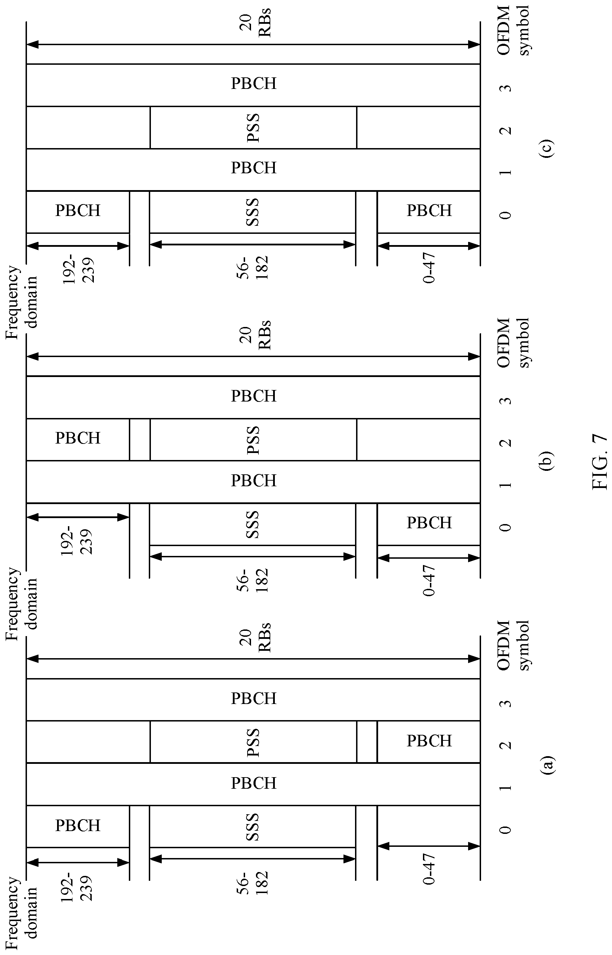

In a third optional implementation, a time domain position of the PSS and/or a time domain position of the SSS and a time domain position of the PBCH information may be combined to jointly indicate whether the MIB included in the synchronization information block is an MIB applied to the unlicensed frequency band. In other words, the first optional implementation and the second optional implementation are combined to jointly indicate whether the MIB included in the synchronization information block is an MIB applied to the unlicensed frequency band. In other words, not only the time domain position of the PSS and the time domain position of the SSS in the synchronization information block are changed, but also a time domain position of a PBCH on a third OFDM symbol of the synchronization information block is changed. Specifically, a structure of the synchronization information block obtained after the change may be shown in FIG. 7.

There are three possible cases in FIG. 7. Herein, (a) in FIG. 7 is a combination of the first optional implementation and the method in (a) in FIG. 6. In this case, some parameters in table 7.4.3.1-1 in TS 38.211 that correspond to the synchronization information block shown in (a) in FIG. 7 may be shown in Table 5:

**Table 5**

| Channel or signal | OFDM symbol number *l* relative to the start of an SS/PBCH block | Subcarrier number *k* relative to the start of an SS/PBCH block |
|---|---|---|
| PSS | *2* | 56, 57, ... , 182 |
| SSS | *0* | 56, 57, ... , 182 |
| Set to 0 | 0 | *0, 1, ..., 55, 183, 184, ..., 191* |
|  | 2 | *48, 49, ..., 55, 183, 184, ..., 239* |
| PBCH | 1, 3 | 0, 1, ... , 239 |
|  | *0* | *192, 193, ..., 239* |
|  | *2* | *0,1, ...,47* |
| DM-RS for PBCH | 1, 3 | 0 + *v*,4 + *v*,8 + *v*, ...,236+v |
|  | *0* | *192+v, 196+v, ..., 236+v* |
|  | *2* | *0+v, 4+v, 8+v, ..., 44+v* |

Bold and italic data in Table 5 shows a modification to a corresponding parameter relative to the synchronization information block shown in FIG. 1. Specifically, the modification to the parameter in Table 5 is an addition of the modification to the parameter in Table 1 and the modification to the parameter in Table 2. For details, refer to related descriptions in Table 1 and Table 2. The details are not described herein again.

Herein, (b) in FIG. 7 is a combination of the first optional implementation and the method in (b) in FIG. 6. In this case, some parameters in table 7.4.3.1-1 in TS 38.211 that correspond to the synchronization information block shown in (b) in FIG. 7 may be shown in Table 6:

**Table 6**

| Channel or signal | OFDM symbol number *l* relative to the start of an SS/PBCH block | Subcarrier number *k* relative to the start of an SS/PBCH block |
|---|---|---|
| PSS | *2* | 56, 57, ... , 182 |
| SSS | *0* | 56, 57, ... , 182 |
| Set to 0 | 0 | *48, 49, ..., 55, 183, 184, ..., 239* |
|  | 2 | *0,1, ..., 55, 183, 184, ..., 191* |
| PBCH | 1, 3 | 0, 1, ... , 239 |
|  | *0* | *0,1, ...,47* |
|  | *2* | *192, 193, ..., 239* |
| DM-RS for PBCH | 1, 3 | 0 + *v*,4 + *v*,8 + *v*, ...,236+v |
|  | *0* | *0+v, 4+v, 8+v, ..., 44+v* |
|  | *2* | *192+v, 196+v, ..., 236+v* |

Bold and italic data in Table 6 shows a modification to a corresponding parameter relative to the synchronization information block shown in FIG. 1. Specifically, the modification to the parameter in Table 6 is an addition of the modification to the parameter in Table 1 and the modification to the parameter in Table 3. For details, refer to related descriptions in Table 1 and Table 3. The details are not described herein again.

Herein, (c) in FIG. 7 is a combination of the first optional implementation and the method in (c) in FIG. 6. In this case, some parameters in table 7.4.3.1-1 in TS 38.211 that correspond to the synchronization information block shown in (c) in FIG. 7 may be shown in Table 7:

**Table 7**

| Channel or signal | OFDM symbol number *l* relative to the start of an SS/PBCH block | Subcarrier number *k* relative to the start of an SS/PBCH block |
|---|---|---|
| PSS | *2* | 56, 57, ... , 182 |
| SSS | *0* | 56, 57, ... , 182 |
| Set to 0 | 0 | *48, 49 ..., 55, 183, 184, ...,192* |
|  | 2 | *0, 1, ..., 55, 183, 184, ..., 239* |
| PBCH | 1, 3 | 0, 1, ... , 239 |
|  | *0* | *0, 1, ..., 47, 192, 193, ..., 239* |
| DM-RS for PBCH | 1, 3 | 0 + *v*,4 + *v*,8 + *v*, ..., 236 + *v* |
|  | *0* | *0+v, 4+v, 8+v, ..., 44+v 192+v, 196+v, ..., 236+v* |

Bold and italic data in Table 7 shows a modification to a corresponding parameter relative to the synchronization information block shown in FIG. 1. Specifically, the modification to the parameter in Table 7 is an addition of the modification to the parameter in Table 1 and the modification to the parameter in Table 4. For details, refer to related descriptions in Table 1 and Table 4. The details are not described herein again.

In the third optional implementation, the time domain position of the PSS and/or the time domain position of the SSS and the time domain position of the PBCH information are combined to jointly indicate whether the MIB included in the synchronization information block is an MIB applied to the unlicensed frequency band. In other words, when determining in both the first optional implementation and the second optional implementation are satisfied, it may be determined whether the MIB included in the synchronization information block is an MIB applied to the unlicensed frequency band. Specifically, it can be understood that the method in the third optional implementation may be a combination of all methods in the second optional implementation. For details, refer to the foregoing related descriptions. The details are not listed herein one by one.

According to the MIB determining method provided in this embodiment of this application, the terminal device may determine, based on the time domain position of the at least one of the PSS, the SSS, and the PBCH information included in the synchronization information block, whether the received MIB is an MIB applied to the unlicensed frequency band.

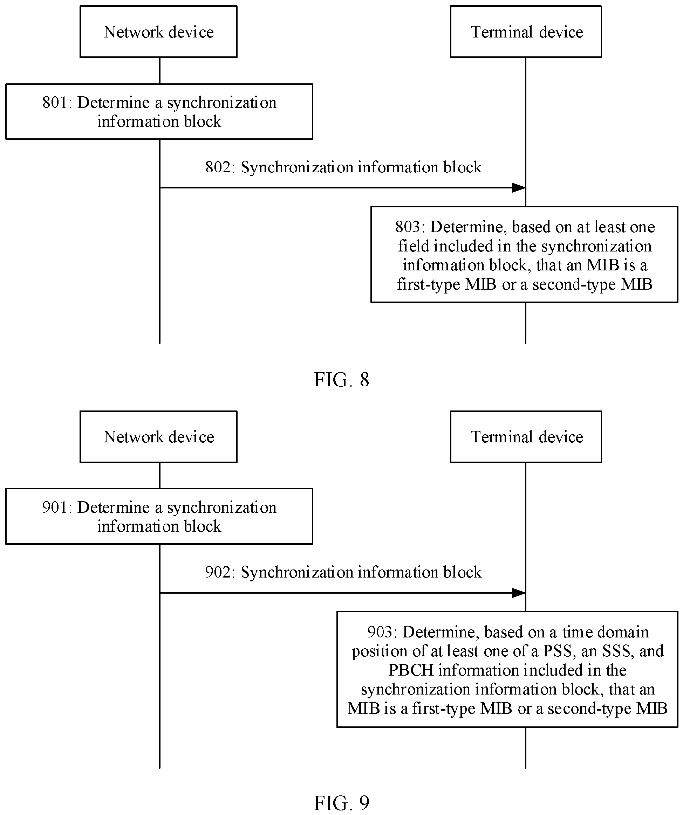

An MIB determining method provided in an embodiment of this application is applicable to the communications system shown in FIG. 2, in other words, is applicable to a communications system that operates in a shared frequency band of U6 GHz (6425 MHz to 7125 MHz) and 52.6 GHz to 71 GHz. Referring to FIG. 8, a specific procedure of the method may include the following steps.

Step 801: A network device determines a synchronization information block, where at least one field included in the synchronization information block is used to indicate that an MIB is a first-type MIB or a second-type MIB, and the at least one field is located in the MIB.

Step 802: The network device sends the synchronization information block to a terminal device.

Step 803: The terminal device determines, based on the at least one field included in the synchronization information block, that the MIB is a first-type MIB or a second-type MIB.

The first-type MIB corresponds to a licensed frequency band, and the second-type MIB corresponds to an unlicensed frequency band; or the first-type MIB corresponds to an unlicensed frequency band, and the second-type MIB corresponds to a licensed frequency band. For ease of understanding, in the following descriptions, that the MIB is an MIB applied to the unlicensed frequency band or an MIB applied to the licensed frequency band is used as an example for description. In other words, the at least one field included in the synchronization information block is used to indicate that the MIB is an MIB applied to the unlicensed frequency band or an MIB applied to the licensed frequency band.

According to the method, the terminal device may determine, based on the at least one field in the synchronization information block, whether the received MIB is an MIB applied to the unlicensed frequency band or an MIB applied to the licensed frequency band.

In an optional implementation, an existing unused field, namely, a spare (spare) field, in the MIB may be used to indicate whether the MIB is an MIB applied to the unlicensed frequency band or an MIB applied to the licensed frequency band. The spare field includes 1 bit (bit), and may provide an indication by using a bit (bit mapping). A specific method may be as follows:

When 1 bit in the spare field is 0, the MIB is an MIB applied to the unlicensed frequency band, in other words, the synchronization information block including the MIB is located on the unlicensed frequency band, and when the 1 bit in the spare field is 1, the MIB is an MIB applied to the licensed frequency band, in other words, the synchronization information block including the MIB is located on the licensed frequency band.

Alternatively, when 1 bit in the spare field is 0, the MIB is an MIB applied to the licensed frequency band, in other words, the synchronization information block including the MIB is located on the licensed frequency band, and when the 1 bit in the spare field is 1, the MIB is an MIB applied to the unlicensed frequency band, in other words, the synchronization information block including the MIB is located on the unlicensed frequency band.

According to the method, the terminal device may determine, based on a specific value of the detected spare field, whether the received MIB is an MIB applied to the unlicensed frequency band or an MIB applied to the licensed frequency band.

In another optional implementation, an existing field, namely, a demodulation reference signal type A position (dmrs-Type A-Position) field, in the MIB may be used to indicate whether the MIB is an MIB applied to the unlicensed frequency band or an MIB applied to the licensed frequency band. For specific descriptions of the dmrs-Type A-Position field, refer to related descriptions in the embodiment shown in FIG. 3. Details are not repeated herein again. The dmrs-Type A-Position field includes 1 bit, and may provide an indication through bit-mapping. A specific method may be as follows:

When 1 bit in the dmrs-Type A-Position field is 0, the MIB is an MIB applied to the unlicensed frequency band, in other words, the synchronization information block including the MIB is located on the unlicensed frequency band, and when the 1 bit in the dmrs-Type A-Position field is 1, the MIB is an MIB applied to the licensed frequency band, in other words, the synchronization information block including the MIB is located on the licensed frequency band.

Alternatively, when 1 bit in the dmrs-Type A-Position field is 0, the MIB is an MIB applied to the licensed frequency band, in other words, the synchronization information block including the MIB is located on the licensed frequency band, and when the 1 bit in the dmrs-Type A-Position field is 1, the MIB is an MIB applied to the unlicensed frequency band, in other words, the synchronization information block including the MIB is located on the unlicensed frequency band.

According to the method, the terminal device may determine, based on a specific value of the detected dmrs-Type A-Position field, whether the received MIB is an MIB applied to the unlicensed frequency band or an MIB applied to the licensed frequency band.

In still another optional implementation, an existing field, namely, a synchronization signal subcarrier offset (ssb-SubcarrierOffset) field, in the MIB may be used to indicate whether the MIB is an MIB applied to the unlicensed frequency band or an MIB applied to the licensed frequency band. Specifically, for descriptions of the ssb-SubcarrierOffset field, refer to related descriptions in the embodiment shown in FIG. 3. Details are not described herein again. The ssb-SubcarrierOffset field includes 4 bits. Specifically, that the ssb-SubcarrierOffset field is used indicate that the MIB is an MIB applied to the unlicensed frequency band or an MIB applied to the licensed frequency band may be implemented in the following four manners:

Manner c1: A least significant bit (1-bit LSB) in the 4 bits included in the ssb-SubcarrierOffset field is used to indicate that the MIB is an MIB applied to the unlicensed frequency band or an MIB applied to the licensed frequency band.

Manner c2: A most significant bit (1-bit MSB) in the 4 bits included in the ssb-SubcarrierOffset field is used to indicate that the MIB is an MIB applied to the unlicensed frequency band or an MIB applied to the licensed frequency band.

Manner c3: Any bit in the 4 bits included in the ssb-SubcarrierOffset field is used to indicate that the MIB is an MIB applied to the unlicensed frequency band or an MIB applied to the licensed frequency band.

Manner c4: At least 2 bits in the 4 bits included in the ssb-SubcarrierOffset field are combined to indicate that the MIB is an MIB applied to the unlicensed frequency band or an MIB applied to the licensed frequency band.

For example, in Manner c1 to Manner c3, when the least significant bit, the most significant bit, or the any bit is 0, the MIB is an MIB applied to the unlicensed frequency band, and when the least significant bit, the most significant bit, or the any bit is 1, the MIB is an MIB applied to the licensed frequency band.

Alternatively, when the least significant bit, the most significant bit, or the any bit is 0, the MIB is an MIB applied to the licensed frequency band, and when the least significant bit, the most significant bit, or the any bit is 1, the MIB is an MIB applied to the unlicensed frequency band.

For example, in Manner c4, a specific method in which the at least 2 bits in the 4 bits included in the ssb-SubcarrierOffset field are combined to indicate that the MIB is an MIB applied to the unlicensed frequency band or an MIB applied to the licensed frequency band may be as follows: Different values including the at least 2 bits in the ssb-SubcarrierOffset field are used to indicate that the MIB is an MIB applied to the unlicensed frequency band or an MIB applied to the licensed frequency band. For example, when 2 bits in the ssb-SubcarrierOffset field are "01", the MIB is an MIB applied to the unlicensed frequency band or an MIB applied to the licensed frequency band. For another example, when 2 bits in the ssb-SubcarrierOffset field are " 10", the MIB is an MIB applied to the unlicensed frequency band or an MIB applied to the licensed frequency band. For still another example, when 3 bits in the ssb-SubcarrierOffset field are "001", the MIB is an MIB applied to the unlicensed frequency band or an MIB applied to the licensed frequency band. The 2 bits or the 3 bits may be consecutive bits in the 4 bits included in the ssb-SubcarrierOffset field, or may be inconsecutive bits. This is not limited in this application. Certainly, in addition to the examples, there may be a plurality of other indication methods. The other indication methods are not listed herein one by one.

According to the method, the terminal device may determine, based on a specific value of the detected ssb-SubcarrierOffset field, whether the received MIB is an MIB applied to the unlicensed frequency band or an MIB applied to the licensed frequency band.

In yet another optional implementation, the at least one field may include at least two fields in the spare field, the dmrs-Type A-Position field, or the ssb-SubcarrierOffset field; or bits included in the at least two fields are combined to indicate that the MIB is an MIB applied to the unlicensed frequency band or an MIB applied to the licensed frequency band.

For example, when the bits included in the at least two fields are combined to indicate that the MIB is an MIB applied to the unlicensed frequency band or an MIB applied to the licensed frequency band, a specific field combination manner is similar to a field combination manner in the embodiment shown in FIG. 3. Mutual reference may be made. Details are not described herein again. Specifically, in any one of the combination-based indication methods, a specific value of combined bits is used to indicate that the MIB is an MIB applied to the unlicensed frequency band or an MIB applied to the licensed frequency band. For example, when 2 bits in the spare field and the dmrs-Type A-Position field are combined to indicate that the MIB is an MIB applied to the unlicensed frequency band or an MIB applied to the licensed frequency band, when the 2 bits are "01", the MIB is an MIB applied to the unlicensed frequency band or an MIB applied to the licensed frequency band. Certainly, there may be other examples. The other examples are not listed herein one by one.

According to the MIB determining method provided in this embodiment of this application, the terminal device may determine, based on the at least one field in the synchronization information block, whether the received MIB is an MIB applied to the unlicensed frequency band or an MIB applied to the licensed frequency band.

Based on the foregoing embodiment, an MIB determining method further provided in an embodiment of this application is applicable to the communications system shown in FIG. 2, in other words, is applicable to a communications system that operates in a shared frequency band of U6 GHz (6425 MHz to 7125 MHz) and 52.6 GHz to 71 GHz. Referring to FIG. 9, a specific procedure of the method may include the following steps.

Step 901: A network device determines a synchronization information block, where a time domain position of at least one of a PSS, an SSS, and PBCH information included in the synchronization information block is used to indicate that an MIB included in the synchronization information block is a first-type MIB or a second-type MIB.

Step 902: The network device sends the synchronization information block to a terminal device.

Step 903: The terminal device determines, based on the time domain position of the at least one of the PSS, the SSS, and the PBCH information included in the synchronization information block, that the MIB is a first-type MIB or a second-type MIB.

According to the method, the terminal device determines, based on the time domain position of the at least one of the PSS, the SSS, and the PBCH information included in the synchronization information block, whether the MIB is an MIB applied to an unlicensed frequency band or an MIB applied to a licensed frequency band.

In a first optional implementation, a time domain position of at least one of the PSS and the SSS may be used to indicate that the MIB included in the synchronization information block is an MIB applied to the unlicensed frequency band or an MIB applied to the licensed frequency band. Specifically, a specific implementation method in which the time domain position of the at least one of the PSS and the SSS is used to indicate that the MIB included in the synchronization information block is an MIB applied to the unlicensed frequency band or an MIB applied to the licensed frequency band is similar to a specific implementation method in the first optional implementation in the embodiment shown in FIG. 4. Mutual reference may be made. Details are not described herein again.

In a second optional implementation, a time domain position of the PBCH information may be used to indicate that the MIB included in the synchronization information block is an MIB applied to the unlicensed frequency band or an MIB applied to the licensed frequency band. Specifically, a specific implementation method in which the time domain position of the PBCH information is used to indicate that the MIB included in the synchronization information block is an MIB applied to the unlicensed frequency band or an MIB applied to the licensed frequency band is similar to a specific implementation method in the second optional implementation in the embodiment shown in FIG. 4. Mutual reference may be made. Details are not described herein again.

In a third optional implementation, a time domain position of the PSS and/or a time domain position of the SSS and a time domain position of the PBCH information may be combined to jointly indicate that the MIB included in the synchronization information block is an MIB applied to the unlicensed frequency band or an MIB applied to the licensed frequency band. In other words, the first optional implementation and the second optional implementation are combined to jointly indicate that the MIB included in the synchronization information block is an MIB applied to the unlicensed frequency band or an MIB applied to the licensed frequency band. Specifically, a specific implementation method in which the time domain position of the PSS and/or the time domain position of the SSS and the time domain position of the PBCH information are combined to jointly indicate that the MIB included in the synchronization information block is an MIB applied to the unlicensed frequency band or an MIB applied to the licensed frequency band is similar to a specific implementation method in the third optional implementation in the embodiment shown in FIG. 4. Mutual reference may be made. Details are not described herein again.

According to the MIB determining method provided in this embodiment of this application, the terminal device may determine, based on the time domain position of the at least one of the PSS, the SSS, and the PBCH information included in the synchronization information block, whether the received MIB is an MIB applied to the unlicensed frequency band or an MIB applied to the licensed frequency band.

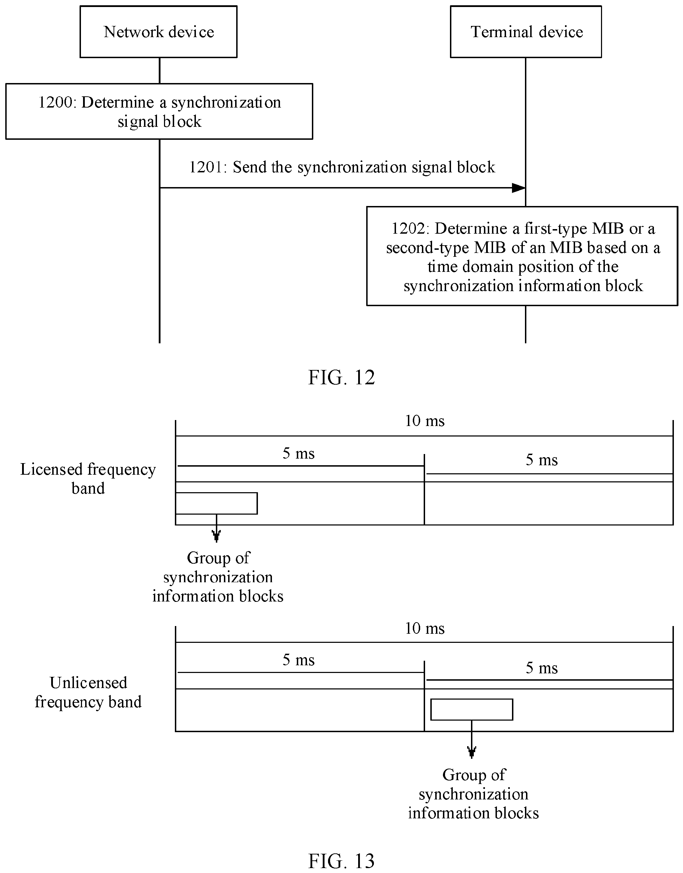

Referring to FIG. 12, an embodiment of this application further provides an MIB determining method. The method is applicable to the communications system shown in FIG. 2, and may be applied to a scenario of a licensed frequency band or an unlicensed frequency band. A procedure of the method may specifically include the following steps.

S1200: A network device determines a synchronization information block.

S1201: The network device sends the synchronization information block to a terminal device. A time domain position in which a network device operating on the licensed frequency band sends a synchronization information block is different from a time domain position in which a network device operating on the unlicensed frequency band sends a synchronization information block, to indicated whether an MIB carried in the synchronization information block is applied to the licensed frequency band or applied to the unlicensed frequency band. In other words, whether the MIB is a first-type MIB or a second-type MIB may be distinguished based on a time domain position of the synchronization information block.

For example, a synchronization information block carrying the first-type MIB and a synchronization information block carrying the second-type MIB may be carried in different time domain positions in one radio frame for sending. The network device may send the synchronization information block in a form of a synchronization information block group. The synchronization information block group may be understood as a synchronization signal burst set (synchronization signal burst set, SS burst set). The network device sends one group of synchronization information blocks at one time. A start position in which the synchronization information block is sent may also be understood as a start position in which a first synchronization information block in the group of synchronization information blocks is sent.

For example, in Manner 1, if the synchronization information block is sent on the licensed frequency band, the synchronization information block starts to be sent from a first symbol in a first slot in a first half frame of a radio frame, in other words, starts to be sent from the first symbol in the first slot in the radio frame, and if the synchronization information block is sent on the unlicensed frequency band, the synchronization information block starts to be sent from a first symbol in a first slot in a second half frame of the radio frame. In a scenario of the unlicensed frequency band, impact of an LBT mechanism is considered. Due to the impact of the LBT mechanism, the synchronization information block can be sent only when a channel is idle. The synchronization information block may start to be sent from a third symbol in the first slot in the second half frame of the radio frame.

For example, in Manner 2, if the synchronization information block is sent on the licensed frequency band, the synchronization information block starts to be sent from a first symbol in a first slot in a second half frame of a radio frame, and if the synchronization information block is sent on the unlicensed frequency band, the synchronization information block starts to be sent from a first symbol in a first slot in a first half frame of the radio frame. In a scenario of the unlicensed frequency band, impact of an LBT mechanism is considered. The synchronization information block may start to be sent from a third symbol in the first slot in the first half frame of the radio frame.

For example, a sending periodicity of the synchronization information block may be one of {1 ms, 10 ms, 20 ms, 40 ms, 80 ms, 160 ms}. For example, the sending periodicity is 10 ms. It indicates to send a group of synchronization information blocks at a periodicity of 10 ms. Within 10 ms, a sending position of the synchronization information block may be flexibly configured.

S1202: The terminal device receives the synchronization information block from the network device. The terminal device may determine, based on a time domain position of the synchronization information block, whether the MIB carried in the synchronization information block is applied to the licensed frequency band or applied to the unlicensed frequency band. In other words, the terminal device may determine whether the MIB is a first-type MIB or a second-type MIB.

Corresponding to Manner 1 of S1201, if the synchronization information block is sent on the licensed frequency band, the terminal device assumes that the synchronization information block starts to be sent from the first symbol in the first slot in the first half frame of the radio frame, in other words, starts to be sent from the first symbol in the first slot in the radio frame. Therefore, the terminal device starts to receive the synchronization information block from a corresponding position. If the synchronization information block is sent on the unlicensed frequency band, in a discovery burst transmission window (discovery burst transmission window, DBTW), the terminal device assumes that the synchronization information block starts to be sent from a position of the first symbol in the first slot in the second half frame of the radio frame. Therefore, the terminal device starts to receive the synchronization information block from a corresponding position.

Corresponding to Manner 2 of S1201, if the synchronization information block is sent on the licensed frequency band, the terminal device assumes that the synchronization information block starts to be sent from a position of the first symbol in the first slot in the second half frame of the radio frame. Therefore, the terminal device starts to receive the synchronization information block from a corresponding position. If the synchronization information block is sent on the unlicensed frequency band, in a discovery burst transmission window (discovery burst transmission window, DBTW), the terminal device assumes that the synchronization information block starts to be sent from the first symbol in the first slot in the first half frame of the radio frame, in other words, starts to be sent from the first symbol in the first slot in the radio frame. Therefore, the terminal device starts to receive the synchronization information block from a corresponding position.

Referring to FIG. 13, Manner 1 is used as an example for description. As shown in FIG. 13, duration of a radio frame is 10 ms. The first half frame of the radio frame is 5 ms, and includes five subframes, namely, a first subframe to a fifth subframe, and corresponding subframe numbers are #0 to #4. The second half frame is 5 ms, and includes five subframes, namely, a sixth subframe to a tenth subframe, and corresponding subframe numbers are #5 to #9. In a scenario of the licensed frequency band, the synchronization information block is located in the first half frame of the radio frame. In other words, the synchronization information block is sent in the first half frame of the radio frame, and the synchronization information block is not sent in the second half frame of the radio frame. In the scenario of the unlicensed frequency band, the synchronization information block is located in the second half frame of the radio frame. In other words, the synchronization information block is sent in the second half frame of the radio frame, and the synchronization information block is not sent in the first half frame of the radio frame. It can be understood that, due to the impact of the LBT mechanism, the synchronization information block can be sent only when the channel is idle. Therefore, in the scenario of the unlicensed frequency band, the network device starts to send synchronization information from a position that is separated by several symbols from a start position of the second half frame of the radio frame.

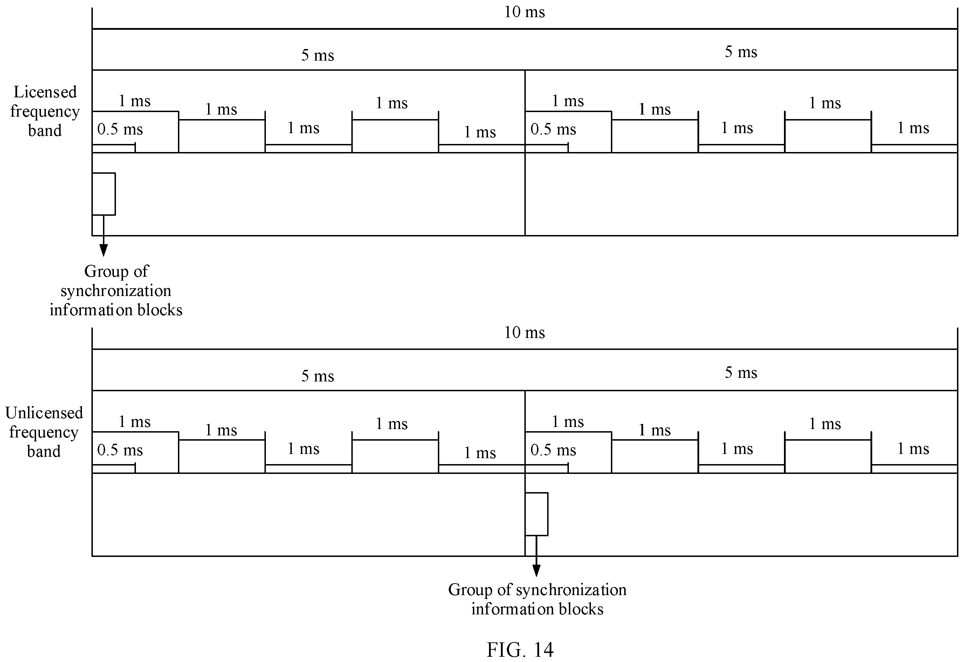

For example, a subcarrier spacing of the synchronization information block is 960 kHz. In other words, a subcarrier spacing of a frequency domain resource used to carry the synchronization information block is 960 kHz. Referring to FIG. 14, one radio frame is 10 ms, one radio frame includes 10 subframes, and one subframe is 1 ms. A first half frame of the radio frame includes first five subframes, namely, a first subframe to a fifth subframe, and corresponding subframe numbers are #0 to #4. A second half frame of the radio frame includes second five subframes, namely, a sixth subframe to a tenth subframe, and corresponding subframe numbers are #5 to #9. One subframe includes 64 slots (slot), a first half subframe of the subframe is 0.5 ms and includes first 32 slots, namely, a first slot to a $32^{nd}$ slot, and corresponding slot numbers are #0 to #31. A second half subframe of the subframe is 0.5 ms and includes second 32 slots, namely, a $33^{rd}$ slot to a $64^{th}$ slot, and corresponding slot numbers are #32 to #61. One slot includes 14 symbols, and corresponding symbol numbers are #0 to #13. The following provides some example configurations:

Configuration 1:

In the scenario of the licensed frequency band, for the network device, a group of synchronization information blocks may be sent in a first half subframe of a subframe of a first half frame of a radio frame, for example, start to be sent from a first symbol in the first half subframe. Based on a quantity of to-be-sent synchronization information blocks, the network device may send the to-be-sent synchronization information block in a first half subframe of each subframe of a first half frame of a radio frame, or the network device may send the to-be-sent synchronization information block in a first half subframe of some subframes in a first half frame of a radio frame.

Correspondingly, for the terminal device, the terminal device considers by default that the synchronization information block starts to be sent from a position of a predetermined symbol in a first half subframe of a subframe of a first half frame of a radio frame. For example, the predetermined symbol may be a first symbol. The position of the predetermined symbol is not specifically limited in this application. In conclusion, the terminal device may learn of a position from which the synchronization information block starts to be sent. After receiving the synchronization information block, the terminal device may determine a position of the received synchronization information block in the radio frame. Alternatively, determining the position may be understood as determining/obtaining timing information of the received synchronization information block.

In the scenario of the unlicensed frequency band, a group of to-be-sent synchronization information blocks may be sent in a second half subframe of a subframe of a first half frame of a radio frame. It can be understood that, in the scenario of the unlicensed frequency band, the network device listens to a channel before sending the synchronization information block, and sends the synchronization information block after successful listening. In this case, a start symbol of sending the synchronization information block by the network device is not necessarily a first symbol in the second half subframe, for example, may be a third symbol in the second half subframe. Based on a quantity of to-be-sent synchronization information blocks, the network device may send the synchronization information block in a second half subframe of each subframe of a first half frame of a radio frame, or the network device may send the synchronization information block in a second half subframe of some subframes in a first half frame of a radio frame.

Correspondingly, in the scenario of the unlicensed frequency band, for the terminal device, the terminal device considers by default that the synchronization information block starts to be sent from a position of a predetermined symbol in a second half subframe of a subframe of a first half frame of a radio frame. For example, the predetermined symbol may be a first symbol or a third symbol. The position of the predetermined symbol is not specifically limited in this application. In conclusion, the terminal device may learn of a position from which the synchronization information block starts to be sent. After receiving the synchronization information block, the terminal device may determine a position of the received synchronization information block in the radio frame. Alternatively, determining the position may be understood as determining/obtaining timing information of the received synchronization information block.

Referring to FIG. 14, in the scenario of the licensed frequency band, a group of synchronization information blocks start to be sent from a first symbol of a first slot in a first half frame of a first subframe of a first half frame of a radio frame. In the scenario of the unlicensed frequency band, because a specific time domain resource is occupied for LBT, a group of synchronization information blocks start to be sent from a third symbol in a first slot in a first half frame of a first subframe of a second half frame of a radio frame.

Configuration 2:

In the scenario of the licensed frequency band, for the network device, a group of to-be-sent synchronization information blocks may be sent in a second half subframe of a subframe of a first half frame of a radio frame, for example, start to be sent from a first symbol in the second half subframe. Based on a quantity of to-be-sent synchronization information blocks, the network device may send the to-be-sent synchronization information block in a second half subframe of each subframe of a first half frame of a radio frame, or the network device may send the to-be-sent synchronization information block in a second half subframe of some subframes in a first half frame of a radio frame.

Correspondingly, for the terminal device, the terminal device considers by default that the synchronization information block starts to be sent from a position of a first symbol in a second half subframe of a subframe in a first half frame of a radio frame. After receiving the synchronization information block, the terminal device may determine a time domain position of the received synchronization information block in the radio frame. Alternatively, determining the time domain position may be understood as determining/obtaining timing information of the received synchronization information block.

In the scenario of the unlicensed frequency band, a group of to-be-sent synchronization information blocks may be sent in a first half subframe of a subframe of a first half frame of a radio frame. It can be understood that, in the scenario of the unlicensed frequency band, the network device listens to a channel before sending the synchronization information block, and sends the synchronization information block after successful listening. In this case, a start symbol of sending the synchronization information block by the network device is not necessarily a first symbol in the first half subframe, for example, may be a third symbol in the first half subframe. Based on a quantity of to-be-sent synchronization information blocks, the network device may send the synchronization information block in a first half subframe of each subframe of a first half frame of a radio frame, or the network device may send the synchronization information block in a first half subframe of some subframes in a first half frame of a radio frame.

Correspondingly, in the scenario of the unlicensed frequency band, for the terminal device, the terminal device considers by default that the synchronization information block starts to be sent from a position of a predetermined symbol in a first half subframe of a subframe of a first half frame of a radio frame. For example, the predetermined symbol may be a first symbol or a third symbol. The position of the predetermined symbol is not specifically limited in this application. In conclusion, the terminal device may learn of a position from which the synchronization information block starts to be sent. After receiving the synchronization information block, the terminal device may determine a position of the received synchronization information block in the radio frame. Alternatively, determining the position may be understood as determining/obtaining timing information of the received synchronization information block.

Configuration 3:

In the scenario of the licensed frequency band, for the network device, a group of to-be-sent synchronization information blocks may be sent in a first half subframe of a subframe of a second half frame of a radio frame, for example, start to be sent from a first symbol in the first half subframe. Based on a quantity of to-be-sent synchronization information blocks, the network device may send the to-be-sent synchronization information block in a first half subframe of each subframe of a second half frame of a radio frame, or the network device may send the to-be-sent synchronization information block in a first half subframe of some subframes in a second half frame of a radio frame.

Correspondingly, for the terminal device, the terminal device considers by default that the synchronization information block starts to be sent from a position of a predetermined symbol in a first half subframe of a subframe of a second half frame of a radio frame. For example, the predetermined symbol may be a first symbol. The position of the predetermined symbol is not specifically limited in this application. In conclusion, the terminal device may learn of a position from which the synchronization information block starts to be sent. After receiving the synchronization information block, the terminal device may determine a position of the received synchronization information block in the radio frame. Alternatively, determining the position may be understood as determining/obtaining timing information of the received synchronization information block.

In the scenario of the unlicensed frequency band, a group of to-be-sent synchronization information blocks may be sent in a second half subframe of a subframe of a second half frame of a radio frame. It can be understood that, in the scenario of the unlicensed frequency band, the network device listens to a channel before sending the synchronization information block, and sends the synchronization information block after successful listening. In this case, a start symbol of sending the synchronization information block by the network device is not necessarily a first symbol in the second half subframe, for example, may be a third symbol in the second half subframe. Based on a quantity of to-be-sent synchronization information blocks, the network device may send the synchronization information block in a second half subframe of each subframe of a second half frame of a radio frame, or the network device may send the synchronization information block in a second half subframe of some subframes in a second half frame of a radio frame.

Correspondingly, in the scenario of the unlicensed frequency band, for the terminal device, the terminal device considers by default that the synchronization information block starts to be sent from a position of a predetermined symbol in a second half subframe of a subframe of a second half frame of a radio frame. For example, the predetermined symbol may be a first symbol or a third symbol. The position of the predetermined symbol is not specifically limited in this application. In conclusion, the terminal device may learn of a position from which the synchronization information block starts to be sent. After receiving the synchronization information block, the terminal device may determine a position of the received synchronization information block in the radio frame. Alternatively, determining the position may be understood as determining/obtaining timing information of the received synchronization information block.

Configuration 4:

In the scenario of the licensed frequency band, for the network device, a group of synchronization information blocks may be sent in a second half subframe of a subframe of a second half frame of a radio frame, for example, start to be sent from a first symbol in the second half subframe. Based on a quantity of to-be-sent synchronization information blocks, the network device may send the to-be-sent synchronization information block in a second half subframe of each subframe of a second half frame of a radio frame, or the network device may send the to-be-sent synchronization information block in a second half subframe of some subframes in a second half frame of a radio frame.

Correspondingly, for the terminal device, the terminal device considers by default that the synchronization information block starts to be sent from a position of a first symbol in a second half subframe of a subframe in a second half frame of a radio frame. After receiving the synchronization information block, the terminal device may determine a time domain position of the received synchronization information block in the radio frame. Alternatively, determining the time domain position may be understood as determining/obtaining timing information of the received synchronization information block.

In the scenario of the unlicensed frequency band, a group of to-be-sent synchronization information blocks may be sent in a first half subframe of a subframe of a second half frame of a radio frame. It can be understood that, in the scenario of the unlicensed frequency band, the network device listens to a channel before sending the synchronization information block, and sends the synchronization information block after successful listening. In this case, a start symbol of sending the synchronization information block by the network device is not necessarily a first symbol in the first half subframe, for example, may be a third symbol in the first half subframe. Based on a quantity of to-be-sent synchronization information blocks, the network device may send the synchronization information block in a first half subframe of each subframe of a second half frame of a radio frame, or the network device may send the synchronization information block in a first half subframe of some subframes in a second half frame of a radio frame.

Correspondingly, in the scenario of the unlicensed frequency band, for the terminal device, the terminal device considers by default that the synchronization information block starts to be sent from a position of a predetermined symbol in a first half subframe of a subframe of a second half frame of a radio frame. For example, the predetermined symbol may be a first symbol or a third symbol. The position of the predetermined symbol is not specifically limited in this application. In conclusion, the terminal device may learn of a position from which the synchronization information block starts to be sent. After receiving the synchronization information block, the terminal device may determine a position of the received synchronization information block in the radio frame. Alternatively, determining the position may be understood as determining/obtaining timing information of the received synchronization information block.

According to the method, the terminal device may determine, based on a time domain position of the synchronization information block, whether the received MIB is an MIB applied to the unlicensed frequency band or an MIB applied to the licensed frequency band, to reduce signaling overheads, and improve access efficiency.

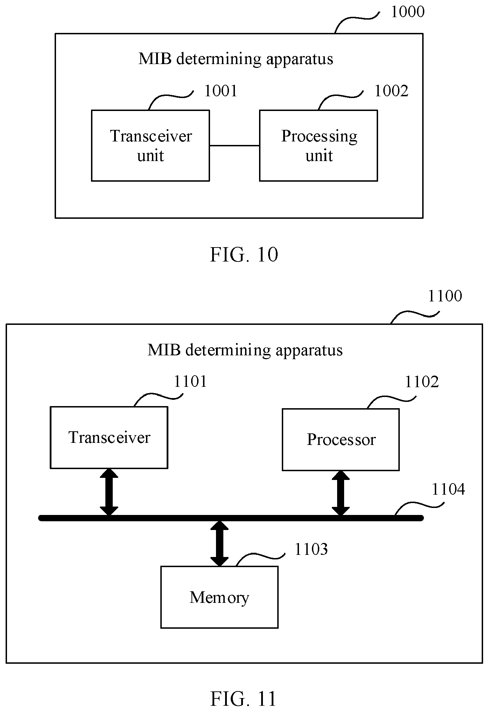

Based on the foregoing embodiments, an embodiment of this application further provides an MIB determining apparatus. Referring to FIG. 10, the MIB determining apparatus 1000 may include a transceiver unit 1001 and a processing unit 1002. The transceiver unit 1001 is configured to be used by the MIB determining apparatus 1000 to receive data (a message, a signal, information, or the like) or send data (a message, a signal, information, or the like), and the processing unit 1002 is configured to control and manage an action of the MIB determining apparatus 1000. The processing unit 1002 may further control steps performed by the transceiver unit 1001.

For example, the MIB determining apparatus 1000 may be the terminal device in the foregoing embodiments, a processor of the terminal device, a chip or a chip system, or a functional module. Alternatively, the MIB determining apparatus 1000 may be a network device in the foregoing embodiments, a processor of the network device, a chip or a chip system, or a functional module.

In an embodiment, when the MIB determining apparatus 1000 is configured to implement a function of the network device in the embodiment shown in FIG. 3, details may further specifically include:

The processing unit 1002 is configured to determine a synchronization information block, where at least one field included in the synchronization information block is used to indicate whether an MIB is an MIB applied to an unlicensed frequency band, and the at least one field is located in the MIB; and the transceiver unit 1001 is configured to send a synchronization information block to a terminal device.

In an embodiment, when the MIB determining apparatus 1000 is configured to implement a function of the terminal device in the embodiment shown in FIG. 3, details may further specifically include:

The transceiver unit 1001 is configured to receive a synchronization information block from a network device, where at least one field included in the synchronization information block is used to indicate whether an MIB is an MIB applied to an unlicensed frequency band, and the at least one field is located in the MIB; and the processing unit 1002 is configured to determine, based on the at least one field included in the synchronization information block, whether the MIB is an MIB applied to the unlicensed frequency band.

In an optional implementation, the at least one field is a spare spare field, and the spare field includes 1 bit; and when the 1 bit is 0, the MIB is an MIB applied to the unlicensed frequency band, and when the 1 bit is not 0, the MIB is an MIB applied to a licensed frequency band; or when the 1 bit is 1, the MIB is an MIB applied to the unlicensed frequency band, and when the 1 bit is not 1, the MIB is an MIB applied to a licensed frequency band.

In another optional implementation, the at least one field is a demodulation reference signal type A position field, and the demodulation reference signal type A position field includes 1 bit; and when the 1 bit is 0, the MIB is an MIB applied to the unlicensed frequency band, and when the 1 bit is not 0, the MIB is an MIB applied to a licensed frequency band; or when the 1 bit is 1, the MIB is an MIB applied to the unlicensed frequency band, and when the 1 bit is not 1, the MIB is an MIB applied to a licensed frequency band.

In still another optional implementation, the at least one field is a synchronization signal subcarrier offset field, and the synchronization signal subcarrier offset field includes 4 bits; and a least significant bit in the 4 bits is used to indicate whether the MIB is an MIB applied to the unlicensed frequency band; or a most significant bit in the 4 bits is used to indicate whether the MIB is an MIB applied to the unlicensed frequency band; or any bit in the 4 bits is used to indicate whether the MIB is an MIB applied to the unlicensed frequency band; or at least 2 bits in the 4 bits are combined to indicate whether the MIB is an MIB applied to the unlicensed frequency band.

Specifically, when the least significant bit, the most significant bit, or the any bit is 0, the MIB is an MIB applied to the unlicensed frequency band, and when the least significant bit, the most significant bit, or the any bit is not 0, the MIB is an MIB applied to a licensed frequency band; or when the least significant bit, the most significant bit, or the any bit is 1, the MIB is an MIB applied to the unlicensed frequency band, and when the least significant bit, the most significant bit, or the any bit is not 1, the MIB is an MIB applied to a licensed frequency band.

In yet another optional implementation, the at least one field includes at least two fields in a spare field, a demodulation reference signal type A position field, or a synchronization signal subcarrier offset field; and bits included in the at least two fields are combined to indicate whether the MIB is an MIB applied to the unlicensed frequency band.

In an embodiment, when the MIB determining apparatus 1000 is configured to implement a function of the network device in the embodiment shown in FIG. 4, details may further specifically include:

The processing unit 1002 is configured to determine a synchronization information block, where a time domain position of at least one of a primary synchronization signal PSS, a secondary synchronization signal SSS, and physical broadcast channel PBCH information included in the synchronization information block is used to indicate whether an MIB included in the synchronization information block is an MIB applied to an unlicensed frequency band; and the transceiver unit 1001 is configured to send the synchronization information block to a terminal device.

In an embodiment, when the MIB determining apparatus 1000 is configured to implement a function of the terminal device in the embodiment shown in FIG. 4, details may further specifically include:

The transceiver unit 1001 is configured to receive a synchronization information block from a network device, where a time domain position of at least one of a primary synchronization signal PSS, a secondary synchronization signal SSS, and physical broadcast channel PBCH information included in the synchronization information block is used to indicate whether an MIB included in the synchronization information block is an MIB applied to an unlicensed frequency band; and the processing unit 1002 is configured to determine, based on the time domain position of the at least one of the PSS, the SSS, and the PBCH information included in the synchronization information block, whether the MIB is an MIB applied to the unlicensed frequency band.

In an optional implementation, that a time domain position of at least one of the PSS and the SSS is used to indicate whether the MIB included in the synchronization information block is an MIB applied to the unlicensed frequency band includes: when the PSS is located on a first orthogonal frequency division multiplexing OFDM symbol of the synchronization information block, the MIB is an MIB applied to the unlicensed frequency band, and when the PSS is not located on the first orthogonal frequency division multiplexing OFDM symbol of the synchronization information block, the MIB is an MIB applied to a licensed frequency band; or when the PSS is located on a third OFDM symbol of the synchronization information block, the MIB is an MIB applied to the unlicensed frequency band, and when the PSS is not located on the third OFDM symbol of the synchronization information block, the MIB is an MIB applied to a licensed frequency band; or when the SSS is located on a third OFDM symbol of the synchronization information block, the MIB is an MIB applied to the unlicensed frequency band, and when the SSS is not located on the third OFDM symbol of the synchronization information block, the MIB is an MIB applied to a licensed frequency band; or when the SSS is located on a first OFDM symbol of the synchronization information block, the MIB is an MIB applied to the unlicensed frequency band, and when the SSS is not located on the first OFDM symbol of the synchronization information block, the MIB is an MIB applied to a licensed frequency band; or when the PSS is located on a first OFDM symbol of the synchronization information block and the SSS is located on a third OFDM symbol of the synchronization information block, the MIB is an MIB applied to the unlicensed frequency band, and when the PSS is not located on the first OFDM symbol of the synchronization information block and the SSS is not located on the third OFDM symbol of the synchronization information block, the MIB is an MIB applied to a licensed frequency band; or when the PSS is located on a third OFDM symbol of the synchronization information block and the SSS is located on a first OFDM symbol of the synchronization information block, the MIB is an MIB applied to the unlicensed frequency band, and when the PSS is not located on the third OFDM symbol of the synchronization information block and the SSS is not located on the first OFDM symbol of the synchronization information block, the MIB is an MIB applied to a licensed frequency band.

In another optional implementation, that a time domain position of the PBCH information is used to indicate whether the MIB included in the synchronization information block is an MIB applied to the unlicensed frequency band includes: when first PBCH information is located in a first frequency domain position on the first OFDM symbol of the synchronization information block, and/or second PBCH information is located in a second frequency domain position on the first OFDM symbol of the synchronization information block, the MIB is an MIB applied to the unlicensed frequency band, and when the first PBCH information is not located in the first frequency domain position on the first OFDM symbol of the synchronization information block, and/or the second PBCH information is not located in the second frequency domain position on the first OFDM symbol of the synchronization information block, the MIB is an MIB applied to the licensed frequency band; or when first PBCH information is located in a first frequency domain position on the third OFDM symbol of the synchronization information block, and second PBCH information is located in a second frequency domain position on the third OFDM symbol of the synchronization information block, the MIB is an MIB applied to the unlicensed frequency band, and when the first PBCH information is not located in the first frequency domain position on the third OFDM symbol of the synchronization information block, and the second PBCH information is not located in the second frequency domain position on the third OFDM symbol of the synchronization information block, the MIB is an MIB applied to the licensed frequency band; or when a first demodulation reference signal DMRS is located in a third frequency domain position on the first OFDM symbol of the synchronization information block, and/or a second DMRS is located in a fourth frequency domain position on the first OFDM symbol of the synchronization information block, the MIB is an MIB applied to the unlicensed frequency band, and when the first demodulation reference signal DMRS is not located in the third frequency domain position on the first OFDM symbol of the synchronization information block, and/or the second DMRS is not located in the fourth frequency domain position on the first OFDM symbol of the synchronization information block, the MIB is an MIB applied to the licensed frequency band; or when a first DMRS is located in a third frequency domain position on the third OFDM symbol of the synchronization information block, and a second DMRS is located in a fourth frequency domain position on the third OFDM symbol of the synchronization information block, the MIB is an MIB applied to the unlicensed frequency band, and when the first DMRS is not located in the third frequency domain position on the third OFDM symbol of the synchronization information block, and the second DMRS is not located in the fourth frequency domain position on the third OFDM symbol of the synchronization information block, the MIB is an MIB applied to the licensed frequency band, where the first DMRS is included in the first PBCH information, and the second DMRS is included in the second PBCH information.

For example, the first frequency domain position includes subcarriers whose subcarrier sequence numbers are {0, 1, ..., 47} on the synchronization information block, and the second frequency domain position includes subcarriers whose subcarrier sequence numbers are {192, 193, ..., 239} on the synchronization information block; or the first frequency domain position includes subcarriers whose subcarrier sequence numbers are {192, 193,..., 239} on the synchronization information block, and the second frequency domain position includes subcarriers whose subcarrier sequence numbers are {0, 1, ..., 47} on the synchronization information block.

For example, the third frequency domain position includes subcarriers whose subcarrier sequence numbers are {0+v, 4+v, ..., 44+v} on the synchronization information block, and the fourth frequency domain position includes subcarriers whose subcarrier sequence numbers are {192+v, 196+v, ..., 236+v} on the synchronization information block; or the first frequency domain position includes subcarriers whose subcarrier sequence numbers are {192+v, 196+v, ..., 236+v} on the synchronization information block, and the second frequency domain position includes subcarriers whose subcarrier sequence numbers are {0+v, 4+v, ..., 44+v} on the synchronization information block, where $v = N_{ID}^{cell} \bmod 4$, and $N_{ID}^{cell}$ is a cell identifier.

Specifically, no information is included on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184,..., 239} on the third OFDM symbol of the synchronization information block; or no information is included on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block; or no information is included on subcarriers whose subcarrier sequence numbers are {48, 49, ..., 55} and subcarriers whose subcarrier sequence numbers are {183, 184, ..., 192} on the first OFDM symbol of the synchronization information block, and no information is included on subcarriers whose subcarrier sequence numbers are {0, 1, ..., 55} and subcarriers whose subcarrier sequence numbers are {183, 184, ..., 239} on the third OFDM symbol of the synchronization information block; or no information is included on subcarriers whose subcarrier sequence numbers are {0, 1, ..., 55} and subcarriers whose subcarrier sequence numbers are {183, 184, ..., 239} on the first OFDM symbol of the synchronization information block, and no information is included on subcarriers whose subcarrier sequence numbers are {48, 49, ..., 55} and subcarriers whose subcarrier sequence numbers are {183, 184,..., 192} on the third OFDM symbol of the synchronization information block.

In an embodiment, when the MIB determining apparatus 1000 is configured to implement a function of the network device in the embodiment shown in FIG. 8, details may specifically include:

The processing unit 1002 is configured to determine a synchronization information block, where at least one field included in the synchronization information block is used to indicate that the MIB is a first-type MIB or a second-type MIB, the at least one field is located in the MIB, the first-type MIB corresponds to a licensed frequency band, and the second-type MIB corresponds to an unlicensed frequency band, or the first-type MIB corresponds to an unlicensed frequency band, and the second-type MIB corresponds to a licensed frequency band; or the transceiver unit 1001 is configured to send the synchronization information block to a terminal device.

In an embodiment, when the MIB determining apparatus 1000 is configured to implement a function of the terminal device in the embodiment shown in FIG. 8, details may specifically include:

The transceiver unit 1001 is configured to receive a synchronization information block from a network device, where at least one field included in the synchronization information block is used to indicate that the MIB is a first-type MIB or a second-type MIB, the at least one field is located in the MIB, the first-type MIB corresponds to a licensed frequency band, and the second-type MIB corresponds to an unlicensed frequency band, or the first-type MIB corresponds to an unlicensed frequency band, and the second-type MIB corresponds to a licensed frequency band; or the processing unit 1002 is configured to determine, based on the at least one field included in the synchronization information block, that the MIB is a first-type MIB or a second-type MIB.

In an optional implementation, the at least one field is a spare field, and the spare field includes 1 bit; and when the 1 bit is 0, the MIB is a first-type MIB, and when the 1 bit is 1, the MIB is a second-type MIB.

In another optional implementation, the at least one field is a demodulation reference signal type A position field, and the demodulation reference signal type A position field includes 1 bit; when the 1 bit is 0, the MIB is a first-type MIB, and when the 1 bit is 1, the MIB is a second-type MIB.

In still another optional implementation, the at least one field is a synchronization signal subcarrier offset field, and the synchronization signal subcarrier offset field includes 4 bits; and a least significant bit in the 4 bits is used to indicate that the MIB is a first-type MIB or a second-type MIB; or a most significant bit in the 4 bits is used to indicate that the MIB is a first-type MIB or a second-type MIB; or any bit in the 4 bits is used to indicate that the MIB is a first-type MIB or a second-type MIB; or at least 2 bits in the 4 bits are combined to indicate that the MIB is a first-type MIB or a second-type MIB.

Specifically, when the least significant bit, the most significant bit, or the any bit is 0, the MIB is a first-type MIB, and when the least significant bit, the most significant bit, or the any bit is 1, the MIB is a second-type MIB.

In yet another optional implementation, the at least one field includes at least two fields in a spare field, a demodulation reference signal type A position field, or a synchronization signal subcarrier offset field; and bits included in the at least two fields are combined to indicate that the MIB is a first-type MIB or a second-type MIB.

In an embodiment, when the MIB determining apparatus 1000 is configured to implement a function of the network device in the embodiment shown in FIG. 9, details may specifically include:

The processing unit 1002 is configured to determine a synchronization information block, where a time domain position of at least one of a primary synchronization signal PSS, a secondary synchronization signal SSS, and physical broadcast channel PBCH information included in the synchronization information block is used to indicate that an MIB included in the synchronization information block is a first-type MIB or a second-type MIB, the first-type MIB corresponds to a licensed frequency band, and the second-type MIB corresponds to an unlicensed frequency band, or the first-type MIB corresponds to an unlicensed frequency band, and the second-type MIB corresponds to a licensed frequency band; or the transceiver unit 1001 is configured to send the synchronization information block to a terminal device.

In an embodiment, when the MIB determining apparatus 1000 is configured to implement a function of the terminal device in the embodiment shown in FIG. 9, details may specifically include:

The transceiver unit 1001 is configured to receive a synchronization information block from a network device, where a time domain position of at least one of a primary synchronization signal PSS, a secondary synchronization signal SSS, and physical broadcast channel PBCH information included in the synchronization information block is used to indicate that an MIB included in the synchronization information block is a first-type MIB or a second type of MIB, the first-type MIB corresponds to a licensed frequency band, and the second-type MIB corresponds to an unlicensed frequency band, or the first-type MIB corresponds to an unlicensed frequency band, and the second-type MIB corresponds to a licensed frequency band; or the processing unit 1002 is configured to determine, based on the time domain position of the at least one of the primary synchronization signal PSS, the secondary synchronization signal SSS, and the physical broadcast channel PBCH information that are included in the synchronization information block, that the MIB is a first-type MIB or a second-type MIB.

In an optional implementation, that a time domain position of at least one of the PSS and the SSS is used to indicate that the MIB included in the synchronization information block is a first-type MIB or a second-type MIB includes: when the PSS is located on a first orthogonal frequency division multiplexing OFDM symbol of the synchronization information block, the MIB is a first-type MIB, and when the PSS is located on a third OFDM symbol of the synchronization information block, the MIB is a second-type MIB; and/or when the SSS is located on the third OFDM symbol of the synchronization information block, the MIB is a first-type MIB, and when the SSS is located on the first OFDM symbol of the synchronization information block, the MIB is a second-type MIB.

In another optional implementation, that a time domain position of the PBCH information is used to indicate that the MIB included in the synchronization information block is a first-type MIB or a second-type MIB includes: when first PBCH information is located in a first frequency domain position on the first OFDM symbol of the synchronization information block, and/or second PBCH information is located in a second frequency domain position on the first OFDM symbol of the synchronization information block, the MIB is a first-type MIB, and when the first PBCH information is located in the first frequency domain position on the third OFDM symbol of the synchronization information block, and the second PBCH information is located in the second frequency domain position on the third OFDM symbol of the synchronization information block, the MIB is a second-type MIB; or when a first demodulation reference signal DMRS is located in a third frequency domain position on the first OFDM symbol of the synchronization information block, and/or a second DMRS is located in a fourth frequency domain position on the first OFDM symbol of the synchronization information block, the MIB is a first-type MIB, and when the first DMRS is located in the third frequency domain position on the third OFDM symbol of the synchronization information block, and the second DMRS is located in the fourth frequency domain position on the third OFDM symbol of the synchronization information block, the MIB is a second-type MIB, where the first DMRS is included in the first PBCH information, and the second DMRS is included in the second PBCH information.

For example, the first frequency domain position includes subcarriers whose subcarrier sequence numbers are {0, 1, ..., 47} on the synchronization information block, and the second frequency domain position includes subcarriers whose subcarrier sequence numbers are {192, 193, ..., 239} on the synchronization information block; or the first frequency domain position includes subcarriers whose subcarrier sequence numbers are {192, 193,..., 239} on the synchronization information block, and the second frequency domain position includes subcarriers whose subcarrier sequence numbers are {0, 1, ..., 47} on the synchronization information block.

For example, the third frequency domain position includes subcarriers whose subcarrier sequence numbers are {0+v, 4+v, ..., 44+v} on the synchronization information block, and the fourth frequency domain position includes subcarriers whose subcarrier sequence numbers are {192+v, 196+v, ..., 236+v} on the synchronization information block; or the first frequency domain position includes subcarriers whose subcarrier sequence numbers are {192+v, 196+v, ..., 236+v} on the synchronization information block, and the second frequency domain position includes subcarriers whose subcarrier sequence numbers are {0+v, 4+v, ..., 44+v} on the synchronization information block, where $v=N_{ID}^{cell} \bmod 4$, and $N_{ID}^{cell}$ is a cell identifier.

Specifically, no information is included on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184,..., 239} on the third OFDM symbol of the synchronization information block; or no information is included on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block; or no information is included on subcarriers whose subcarrier sequence numbers are {48, 49, ..., 55} and subcarriers whose subcarrier sequence numbers are {183, 184, ..., 192} on the first OFDM symbol of the synchronization information block, and no information is included on subcarriers whose subcarrier sequence numbers are {0, 1, ..., 55} and subcarriers whose subcarrier sequence numbers are {183, 184, ..., 239} on the third OFDM symbol of the synchronization information block; or no information is included on subcarriers whose subcarrier sequence numbers are {0, 1, ..., 55} and subcarriers whose subcarrier sequence numbers are {183, 184, ..., 239} on the first OFDM symbol of the synchronization information block, and no information is included on subcarriers whose subcarrier sequence numbers are {48, 49, ..., 55} and subcarriers whose subcarrier sequence numbers are {183, 184, ..., 192} on the third OFDM symbol of the synchronization information block.

It should be noted that, in embodiments of this application, division into the units is an example, and is merely logical function division. During actual implementation, another division manner may be used. In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, the part contributing to the prior art, or all or a part of the technical solutions may be implemented in the form of a software product. The computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides an MIB determining apparatus. Referring to FIG. 11, the MIB determining apparatus 1100 may include a transceiver 1101 and a processor 1102. Optionally, the MIB determining apparatus 1100 may further include a memory 1103. The memory 1103 may be disposed inside the MIB determining apparatus 1100, or may be disposed outside the MIB determining apparatus 1100. The processor 1102 may control the transceiver 1101 to receive and send data.

Specifically, the processor 1102 may be a central processing unit (central processing unit, CPU), a network processor (network processor, NP), or a combination of a CPU and an NP. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 1101, the processor 1102, and the memory 1103 are connected to each other. Optionally, the transceiver 1101, the processor 1102, and the memory 1103 are connected to each other by using a bus 1104. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

In an optional implementation, the memory 1103 is configured to store a program, or the like. Specifically, the program may include program code, and the program code includes computer operation instructions. The memory 1103 may include a RAM, and may further include a nonvolatile memory (non-volatile memory), for example, one or more magnetic disk memories. The processor 1102 executes the application stored in the memory 1103, to implement the functions, thereby implementing a function of the MIB determining apparatus 1100.

For example, the MIB determining apparatus 1100 may be the terminal device in the embodiments, or may be the network device in the foregoing embodiments.

In an embodiment, when the MIB determining apparatus 1100 implements a function of the network device in the embodiment shown in FIG. 3, the transceiver 1101 may implement a transceiver operation performed by the network device in the embodiment shown in FIG. 3. The processor 1102 may implement an operation other than the transceiver operation performed by the network device in the embodiment shown in FIG. 3. Specifically, for related specific descriptions, refer to related descriptions in the embodiment shown in FIG. 3. Details are not described herein again.

In another embodiment, when the MIB determining apparatus 1100 implements a function of the terminal device in the embodiment shown in FIG. 3, the transceiver 1101 may implement a transceiver operation performed by the terminal device in the embodiment shown in FIG. 3. The processor 1102 may implement an operation other than the transceiver operation performed by the terminal device in the embodiment shown in FIG. 3. Specifically, for related specific descriptions, refer to related descriptions in the embodiment shown in FIG. 3. Details are not described herein again.

In still another embodiment, when the MIB determining apparatus 1100 implements a function of the network device in the embodiment shown in FIG. 4, the transceiver 1101 may implement a transceiver operation performed by the network device in the embodiment shown in FIG. 4. The processor 1102 may implement an operation other than the transceiver operation performed by the network device in the embodiment shown in FIG. 4. Specifically, for related specific descriptions, refer to related descriptions in the embodiment shown in FIG. 4. Details are not described herein again.

In another embodiment, when the MIB determining apparatus 1100 implements a function of the terminal device in the embodiment shown in FIG. 4, the transceiver 1101 may implement a transceiver operation performed by the terminal device in the embodiment shown in FIG. 4. The processor 1102 may implement an operation other than the transceiver operation performed by the terminal device in the embodiment shown in FIG. 4. Specifically, for related specific descriptions, refer to related descriptions in the embodiment shown in FIG. 4. Details are not described herein again.

In an embodiment, when the MIB determining apparatus 1100 implements a function of the network device in the embodiment shown in FIG. 8, the transceiver 1101 may implement a transceiver operation performed by the network device in the embodiment shown in FIG. 8. The processor 1102 may implement an operation other than the transceiver operation performed by the network device in the embodiment shown in FIG. 8. Specifically, for related specific descriptions, refer to related descriptions in the embodiment shown in FIG. 8. Details are not described herein again.

In another embodiment, when the MIB determining apparatus 1100 implements a function of the terminal device in the embodiment shown in FIG. 8, the transceiver 1101 may implement a transceiver operation performed by the terminal device in the embodiment shown in FIG. 8. The processor 1102 may implement an operation other than the transceiver operation performed by the terminal device in the embodiment shown in FIG. 8. Specifically, for related specific descriptions, refer to related descriptions in the embodiment shown in FIG. 8. Details are not described herein again.

In still another embodiment, when the MIB determining apparatus 1100 implements a function of the network device in the embodiment shown in FIG. 9, the transceiver 1101 may implement a transceiver operation performed by the network device in the embodiment shown in FIG. 9. The processor 1102 may implement an operation other than the transceiver operation performed by the network device in the embodiment shown in FIG. 9. Specifically, for related specific descriptions, refer to related descriptions in the embodiment shown in FIG. 9. Details are not described herein again.

In another embodiment, when the MIB determining apparatus 1100 implements a function of the terminal device in the embodiment shown in FIG. 9, the transceiver 1101 may implement a transceiver operation performed by the terminal device in the embodiment shown in FIG. 9. The processor 1102 may implement an operation other than the transceiver operation performed by the terminal device in the embodiment shown in FIG. 9. Specifically, for related specific descriptions, refer to related descriptions in the embodiment shown in FIG. 9. Details are not described herein again.

Based on the foregoing embodiments, an embodiment of this application provides a communications system. The communications system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the MIB determining method provided in the method embodiments.

An embodiment of this application further provides a computer program product. The computer program product is configured to store a computer program. When the computer program is executed by a computer, the computer may implement the MIB determining method provided in the method embodiments.

An embodiment of this application further provides a chip. The chip is coupled to a memory, and the chip is configured to implement the MIB determining method provided in the method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of the claims of this application and their equivalent technologies.

A method for distinguishing between an old MIB and a new MIB is provided. In a system operating on a licensed frequency band, an SSB burst set is sent in a first half frame of a radio frame, and in a system operating on an unlicensed frequency band, an SSB burst set is sent in a second half frame of a radio frame.

In the system operating on the licensed frequency band, UE considers by default that an SSB starts from a position of a first symbol in a first slot in a first half frame of a radio frame. In the system operating on the unlicensed frequency band, in a discovery burst transmission window (DBTW), UE considers by default that a transmitted SSB starts from a position of a first symbol in a first slot in a second half frame of a radio frame. Alternatively, in the system operating on the licensed frequency band, UE considers by default that an SSB starts from a position of a first symbol in a first slot in a second half frame of a radio frame. In the system operating on the unlicensed frequency band, in a discovery burst transmission window (DBTW), UE considers by default that a transmitted SSB starts from a position of a first symbol in a first slot in a first half frame of a radio frame.

For example, as shown in FIG. 13, an SSB burst set in a system on a licensed frequency band is sent in a first half frame of each radio frame, and an SSB in a system on an unlicensed frequency band is sent in a second half frame of each radio frame.

Alternatively, when a subcarrier spacing of an SSB is 960 kHz, in a system operating on a licensed frequency band, an SSB burst set is sent in a first half subframe of each subframe of a first half frame of a radio frame, and in a system operating on an unlicensed frequency band, an SSB burst set may be sent in a second half subframe of each subframe of a first half frame of a radio frame, or an SSB burst set may be sent in a first half subframe of each subframe of a second half frame of a radio frame, and an SSB burst set may be sent in a second half subframe of each subframe of a second half frame of a radio frame.

Alternatively, when a subcarrier spacing of an SSB is 960 kHz, in a system operating on a licensed frequency band, an SSB burst set is sent in a second half subframe of each subframe of a first half frame of a radio frame, and in a system operating on an unlicensed frequency band, an SSB burst set may be sent in a first half subframe of each subframe of a first half frame of a radio frame, or an SSB burst set may be sent in a first half subframe of each subframe of a second half frame of a radio frame, and an SSB burst set may be sent in a second half subframe of each subframe of a second half frame of a radio frame.

Alternatively, when a subcarrier spacing of an SSB is 960 kHz, in a system operating on a licensed frequency band, an SSB burst set is sent in a first half subframe of each subframe of a second half frame of a radio frame, and in a system operating on an unlicensed frequency band, an SSB burst set may be sent in a first half subframe of each subframe of a first half frame of a radio frame, or an SSB burst set may be sent in a second half subframe of each subframe of a first half frame of a radio frame, and an SSB burst set may be sent in a second half subframe of each subframe of a second half frame of a radio frame.

Alternatively, when a subcarrier spacing of an SSB is 960 kHz, in a system operating on a licensed frequency band, an SSB burst set is sent in a second half subframe of each subframe of a second half frame of a radio frame, and in a system operating on an unlicensed frequency band, an SSB burst set may be sent in a first half subframe of each subframe of a first half frame of a radio frame, or an SSB burst set may be sent in a second half subframe of each subframe of a first half frame of a radio frame, and an SSB burst set may be sent in a first half subframe of each subframe of a second half frame of a radio frame.

In a system operating on a licensed frequency band, UE considers by default that an SSB starts from a position of a first symbol in a first half subframe of each subframe of a first half frame of a radio frame. In a system operating on an unlicensed frequency band, in a discovery burst transmission window (DBTW), UE considers by default that an SSB starts from a position of a first symbol in a second half subframe of each subframe of a first half frame of a radio frame; or UE considers by default that an SSB starts from a position of a first symbol in a first half subframe of each subframe of a second half frame of a radio frame; or UE considers by default that an SSB starts from a position of a first symbol in a second half subframe of each subframe of a second half frame of a radio frame.

Alternatively, in a system operating on a licensed frequency band, UE considers by default that an SSB starts from a position of a first symbol in a second half subframe of each subframe of a first half frame of a radio frame. In a system operating on an unlicensed frequency band, in a discovery burst transmission window (DBTW), UE considers by default that an SSB starts from a position of a first symbol in a first half subframe of each subframe of a first half frame of a radio frame; or UE considers by default that an SSB starts from a position of a first symbol in a first half subframe of each subframe of a second half frame of a radio frame; or UE considers by default that an SSB starts from a position of a first symbol in a second half subframe of each subframe of a second half frame of a radio frame.

Alternatively, in a system operating on a licensed frequency band, UE considers by default that an SSB starts from a position of a first symbol in a first half subframe of each subframe of a second half frame of a radio frame. In a system operating on an unlicensed frequency band, in a discovery burst transmission window (DBTW), UE considers by default that an SSB starts from a position of a first symbol in a first half subframe of each subframe of a first half frame of a radio frame; or UE considers by default that an SSB starts from a position of a first symbol in a second half subframe of each subframe of a first half frame of a radio frame; or UE considers by default that an SSB starts from a position of a first symbol in a second half subframe of each subframe of a second half frame of a radio frame.

Alternatively, in a system operating on a licensed frequency band, UE considers by default that an SSB starts from a position of a first symbol in a second half subframe of each subframe of a second half frame of a radio frame. In a system operating on an unlicensed frequency band, in a discovery burst transmission window (DBTW), UE considers by default that an SSB starts from a position of a first symbol in a first half subframe of each subframe of a first half frame of a radio frame; or UE considers by default that an SSB starts from a position of a first symbol in a second half subframe of each subframe of a first half frame of a radio frame; or UE considers by default that an SSB starts from a position of a first symbol in a first half subframe of each subframe of a second half frame of a radio frame.

For example, as shown in FIG. 14, an SSB burst set in a system on a licensed frequency band is sent in a first half subframe of each subframe of a first half frame of a radio frame, and an SSB in a system on an unlicensed frequency band is sent in a first half subframe of each subframe of a second half frame of a radio frame.

In this case, a periodicity of an SSB is {1 ms, 10 ms, 20 ms, 40 ms, 80 ms, 160 ms}.

**Claims**

1. A master information block MIB determining method, comprising:
sending, by a network device, a synchronization information block to a terminal device, wherein at least one field comprised in the synchronization information block is used to indicate whether an MIB is an MIB applied to an unlicensed frequency band, and the at least one field is located in the MIB.

2. A master information block MIB determining method, comprising:

receiving, by a terminal device, a synchronization information block from a network device, wherein at least one field comprised in the synchronization information block is used to indicate whether an MIB is an MIB applied to an unlicensed frequency band, and the at least one field is located in the MIB; and
determining, by the terminal device based on the at least one field comprised in the synchronization information block, whether the MIB is an MIB applied to the unlicensed frequency band.

3. The method according to claim 1 or 2, wherein the at least one field is a spare spare field, and the spare field comprises 1 bit; and

when the 1 bit is 0, the MIB is an MIB applied to the unlicensed frequency band, and when the 1 bit is not 0, the MIB is an MIB applied to a licensed frequency band; or
when the 1 bit is 1, the MIB is an MIB applied to the unlicensed frequency band, and when the 1 bit is not 1, the MIB is an MIB applied to a licensed frequency band.

4. The method according to claim 1 or 2, wherein the at least one field is a demodulation reference signal type A position field, and the demodulation reference signal type A position field comprises 1 bit; and

when the 1 bit is 0, the MIB is an MIB applied to the unlicensed frequency band, and when the 1 bit is not 0, the MIB is an MIB applied to a licensed frequency band; or
when the 1 bit is 1, the MIB is an MIB applied to the unlicensed frequency band, and when the 1 bit is not 1, the MIB is an MIB applied to a licensed frequency band.

5. The method according to claim 1 or 2, wherein the at least one field is a synchronization signal subcarrier offset field, and the synchronization signal subcarrier offset field comprises 4 bits; and

a least significant bit in the 4 bits is used to indicate whether the MIB is an MIB applied to the unlicensed frequency band; or
a most significant bit in the 4 bits is used to indicate whether the MIB is an MIB applied to the unlicensed frequency band; or
any bit in the 4 bits is used to indicate whether the MIB is an MIB applied to the unlicensed frequency band; or
at least 2 bits in the 4 bits are combined to indicate whether the MIB is an MIB applied to the unlicensed frequency band.

6. The method according to claim 5, wherein

when the least significant bit, the most significant bit, or the any bit is 0, the MIB is an MIB applied to the unlicensed frequency band, and when the least significant bit, the most significant bit, or the any bit is not 0, the MIB is an MIB applied to a licensed frequency band; or
when the least significant bit, the most significant bit, or the any bit is 1, the MIB is an MIB applied to the unlicensed frequency band, and when the least significant bit, the most significant bit, or the any bit is not 1, the MIB is an MIB applied to a licensed frequency band.

7. The method according to claim 1 or 2, wherein the at least one field comprises at least two fields in a spare field, a demodulation reference signal type A position field, or a synchronization signal subcarrier offset field; and

bits comprised in the at least two fields are combined to indicate whether the MIB is an MIB applied to the unlicensed frequency band.

8. A master information block MIB determining method, comprising:

sending, by a network device, a synchronization information block to a terminal device, wherein a time domain position of at least one of a primary synchronization signal PSS, a secondary synchronization signal SSS, and physical broadcast channel PBCH information comprised in the synchronization information block is used to indicate whether an MIB comprised in the synchronization information block is an MIB applied to an unlicensed frequency band.

9. A master information block MIB determining method, comprising:

receiving, by a terminal device, a synchronization information block from a network device, wherein a time domain position of at least one of a primary synchronization signal PSS, a secondary synchronization signal SSS, and physical broadcast channel PBCH information comprised in the synchronization information block is used to indicate whether an MIB comprised in the synchronization information block is an MIB applied to an unlicensed frequency band; and

determining, by the terminal device based on the time domain position of the at least one of the PSS, the SSS, and the PBCH information comprised in the synchronization information block, whether the MIB is an MIB applied to the unlicensed frequency band.

10. The method according to claim 8 or 9, wherein that a time domain position of at least one of the PSS and the SSS is used to indicate whether the MIB comprised in the synchronization information block is an MIB applied to the unlicensed frequency band comprises:

when the PSS is located on a first orthogonal frequency division multiplexing OFDM symbol of the synchronization information block, the MIB is an MIB applied to the unlicensed frequency band, and when the PSS is not located on the first orthogonal frequency division multiplexing OFDM symbol of the synchronization information block, the MIB is an MIB applied to a licensed frequency band; or

when the PSS is located on a third OFDM symbol of the synchronization information block, the MIB is an MIB applied to the unlicensed frequency band, and when the PSS is not located on the third OFDM symbol of the synchronization information block, the MIB is an MIB applied to a licensed frequency band; or

when the SSS is located on a third OFDM symbol of the synchronization information block, the MIB is an MIB applied to the unlicensed frequency band, and when the SSS is not located on the third OFDM symbol of the synchronization information block, the MIB is an MIB applied to a licensed frequency band; or

when the SSS is located on a first OFDM symbol of the synchronization information block, the MIB is an MIB applied to the unlicensed frequency band, and when the SSS is not located on the first OFDM symbol of the synchronization information block, the MIB is an MIB applied to a licensed frequency band; or

when the PSS is located on a first OFDM symbol of the synchronization information block and the SSS is located on a third OFDM symbol of the synchronization information block, the MIB is an MIB applied to the unlicensed frequency band, and when the PSS is not located on the first OFDM symbol of the synchronization information block and the SSS is not located on the third OFDM symbol of the synchronization information block, the MIB is an MIB applied to a licensed frequency band; or

when the PSS is located on a third OFDM symbol of the synchronization information block and the SSS is located on a first OFDM symbol of the synchronization information block, the MIB is an MIB applied to the unlicensed frequency band, and when the PSS is not located on the third OFDM symbol of the synchronization information block and the SSS is not located on the first OFDM symbol of the synchronization information block, the MIB is an MIB applied to a licensed frequency band.

11. The method according to any one of claims 8 to 10, wherein that a time domain position of the PBCH information is used to indicate whether the MIB comprised in the synchronization information block is an MIB applied to the unlicensed frequency band comprises:

when first PBCH information is located in a first frequency domain position on the first OFDM symbol of the synchronization information block, and/or second PBCH information is located in a second frequency domain position on the first OFDM symbol of the synchronization information block, the MIB is an MIB applied to the unlicensed frequency band, and when the first PBCH information is not located in the first frequency domain position on the first OFDM symbol of the synchronization information block, and/or the second PBCH information is not located in the second frequency domain position on the first OFDM symbol of the synchronization information block, the MIB is an MIB applied to the licensed frequency band; or

when first PBCH information is located in a first frequency domain position on the third OFDM symbol of the synchronization information block, and second PBCH information is located in a second frequency domain position on the third OFDM symbol of the synchronization information block, the MIB is an MIB applied to the unlicensed frequency band, and when the first PBCH information is not located in the first frequency domain position on the third OFDM symbol of the synchronization information block, and the second PBCH information is not located in the second frequency domain position on the third OFDM symbol of the synchronization information block, the MIB is an MIB applied to the licensed frequency band; or

when a first demodulation reference signal DMRS is located in a third frequency domain position on the first OFDM symbol of the synchronization information block, and/or a second DMRS is located in a fourth frequency domain position on the first OFDM symbol of the synchronization information block, the MIB is an MIB applied to the unlicensed frequency band, and when the first demodulation reference signal DMRS is not located in the third frequency domain position on the first OFDM symbol of the synchronization information block, and/or the second DMRS is not located in the fourth frequency domain position on the first OFDM symbol of the synchronization information block, the MIB is an MIB applied to the licensed frequency band; or

when a first DMRS is located in a third frequency domain position on the third OFDM symbol of the synchronization information block, and a second DMRS is located in a fourth frequency domain position on the third OFDM symbol of the synchronization information block, the MIB is an MIB applied to the unlicensed frequency band, and when the first DMRS is not located in the third frequency domain position on the third OFDM symbol of the synchronization information block, and the second DMRS is not located in the fourth frequency domain position on the third OFDM symbol of the synchronization information block, the MIB is an MIB applied to the licensed frequency band, wherein

the first DMRS is comprised in the first PBCH information, and the second DMRS is comprised in the second PBCH information.

12. The method according to claim 11, wherein the first frequency domain position comprises subcarriers whose subcarrier sequence numbers are {0, 1, ..., 47} on the synchronization information block, and the second frequency domain position comprises subcarriers whose subcarrier sequence numbers are {192, 193, ..., 239} on the synchronization information block; or the first frequency domain position comprises subcarriers whose subcarrier sequence numbers are {192, 193,..., 239} on the synchronization information block, and the second frequency domain position comprises subcarriers whose subcarrier sequence numbers are {0, 1, ..., 47} on the synchronization information block.

13. The method according to claim 11, wherein the third frequency domain position comprises subcarriers whose subcarrier sequence numbers are {0+v, 4+v, ..., 44+v} on the synchronization information block, and the fourth frequency domain position comprises subcarriers whose subcarrier sequence numbers are {192+v, 196+v, ..., 236+v} on the synchronization information block; or the first frequency domain position comprises subcarriers whose subcarrier sequence numbers are {192+v, 196+v, ..., 236+v} on the synchronization information block, and the second frequency domain position comprises subcarriers whose subcarrier sequence numbers are {0+v, 4+v, ..., 44+v} on the synchronization information block, wherein

$$v = N_{ID}^{cell} \bmod 4 ,$$

and $N_{ID}^{cell}$ is a cell identifier.

14. The method according to any one of claims 11 to 13, wherein

no information is comprised on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184, ..., 239} on the third OFDM symbol of the synchronization information block; or

no information is comprised on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block; or

no information is comprised on subcarriers whose subcarrier sequence numbers are {48, 49, ..., 55} and subcarriers whose subcarrier sequence numbers are {183, 184, ..., 192} on the first OFDM symbol of the synchronization information block, and no information is comprised on subcarriers whose subcarrier sequence numbers are {0, 1, ..., 55} and subcarriers whose subcarrier sequence numbers are {183, 184, ..., 239} on the third OFDM symbol of the synchronization information block; or

no information is comprised on subcarriers whose subcarrier sequence numbers are {0, 1, ..., 55} and subcarriers whose subcarrier sequence numbers are {183, 184, ..., 239} on the first OFDM symbol of the synchronization information block, and no information is comprised on subcarriers whose subcarrier sequence numbers are {48, 49, ..., 55} and subcarriers whose subcarrier sequence numbers are {183, 184, ..., 192} on the third OFDM symbol of the synchronization information block.

15. A master information block MIB determining apparatus, comprising:
a transceiver unit, configured to send a synchronization information block to a terminal device, wherein at least one field comprised in the synchronization information block is used to indicate whether an MIB is an MIB applied to an unlicensed frequency band, and the at least one field is located in the MIB.

16. A master information block MIB determining apparatus, comprising:

a transceiver unit, configured to receive a synchronization information block from a network device, wherein at least one field comprised in the synchronization information block is used to indicate whether an MIB is an MIB applied to an unlicensed frequency band, and the at least one field is located in the MIB; and
a processing unit, configured to determine, based on the at least one field comprised in the synchronization information block, whether the MIB is an MIB applied to the unlicensed frequency band.

17. The apparatus according to claim 15 or 16, wherein the at least one field is a spare spare field, and the spare field comprises 1 bit; and

when the 1 bit is 0, the MIB is an MIB applied to the unlicensed frequency band, and when the 1 bit is not 0, the MIB is an MIB applied to a licensed frequency band; or
when the 1 bit is 1, the MIB is an MIB applied to the unlicensed frequency band, and when the 1 bit is not 1, the MIB is an MIB applied to a licensed frequency band.

18. The apparatus according to claim 15 or 16, wherein the at least one field is a demodulation reference signal type A position field, and the demodulation reference signal type A position field comprises 1 bit; and

when the 1 bit is 0, the MIB is an MIB applied to the unlicensed frequency band, and when the 1 bit is not 0, the MIB is an MIB applied to a licensed frequency band; or
when the 1 bit is 1, the MIB is an MIB applied to the unlicensed frequency band, and when the 1 bit is not 1, the MIB is an MIB applied to a licensed frequency band.

19. The apparatus according to claim 15 or 16, wherein the at least one field is a synchronization signal subcarrier offset field, and the synchronization signal subcarrier offset field comprises 4 bits; and

a least significant bit in the 4 bits is used to indicate whether the MIB is an MIB applied to the unlicensed frequency band; or
a most significant bit in the 4 bits is used to indicate whether the MIB is an MIB applied to the unlicensed frequency band; or
any bit in the 4 bits is used to indicate whether the MIB is an MIB applied to the unlicensed frequency band; or
at least 2 bits in the 4 bits are combined to indicate whether the MIB is an MIB applied to the unlicensed frequency band.

20. The apparatus according to claim 19, wherein

when the least significant bit, the most significant bit, or the any bit is 0, the MIB is an MIB applied to the unlicensed frequency band, and when the least significant bit, the most significant bit, or the any bit is not 0, the MIB is an MIB applied to a licensed frequency band; or
when the least significant bit, the most significant bit, or the any bit is 1, the MIB is an MIB applied to the unlicensed frequency band, and when the least significant bit, the most significant bit, or the any bit is not 1, the MIB is an MIB applied to a licensed frequency band.

21. The apparatus according to claim 15 or 16, wherein the at least one field comprises at least two fields in a spare field, a demodulation reference signal type A position field, or a synchronization signal subcarrier offset field; and bits comprised in the at least two fields are combined to indicate whether the MIB is an MIB applied to the unlicensed frequency band.

22. A master information block MIB determining apparatus, comprising:
a transceiver unit, configured to send a synchronization information block to a terminal device, wherein a time domain position of at least one of a primary synchronization signal PSS, a secondary synchronization signal SSS, and physical broadcast channel PBCH information comprised in the synchronization information block is used to indicate whether an MIB comprised in the synchronization information block is an MIB applied to an unlicensed frequency band.

23. A master information block MIB determining apparatus, comprising:

a transceiver unit, configured to receive a synchronization information block from a network device, wherein a time domain position of at least one of a primary synchronization signal PSS, a secondary synchronization signal SSS, and physical broadcast channel PBCH information comprised in the synchronization information block is used to indicate whether an MIB comprised in the synchronization information block is an MIB applied to an unlicensed frequency band; and
a processing unit, configured to determine, based on the time domain position of the at least one of the PSS, the SSS, and the PBCH information comprised in the synchronization information block, whether the MIB is an MIB applied to the unlicensed frequency band.

24. The apparatus according to claim 22 or 23, wherein that a time domain position of at least one of the PSS and the SSS is used to indicate that the MIB comprised in the synchronization information block is an MIB applied to the unlicensed frequency band comprises:

when the PSS is located on a first orthogonal frequency division multiplexing OFDM symbol of the synchronization information block, the MIB is an MIB applied to the unlicensed frequency band, and when the PSS is not located on the first orthogonal frequency division multiplexing OFDM symbol of the synchronization information block, the MIB is an MIB applied to a licensed frequency band; or
when the PSS is located on a third OFDM symbol of the synchronization information block, the MIB is an MIB applied to the unlicensed frequency band, and when the PSS is not located on the third OFDM symbol of the synchronization information block, the MIB is an MIB applied to a licensed frequency band; or
when the SSS is located on a third OFDM symbol of the synchronization information block, the MIB is an MIB applied to the unlicensed frequency band, and when the SSS is not located on the third OFDM symbol of the synchronization information block, the MIB is an MIB applied to a licensed frequency band; or
when the SSS is located on a first OFDM symbol of the synchronization information block, the MIB is an MIB applied to the unlicensed frequency band, and when the SSS is not located on the first OFDM symbol of the synchronization information block, the MIB is an MIB applied to a licensed frequency band; or
when the PSS is located on a first OFDM symbol of the synchronization information block and the SSS is located on a third OFDM symbol of the synchronization information block, the MIB is an MIB applied to the unlicensed frequency band, and when the PSS is not located on the first OFDM symbol of the synchronization information block and the SSS is not located on the third OFDM symbol of the synchronization information block, the MIB is an MIB applied to a licensed frequency band; or
when the PSS is located on a third OFDM symbol of the synchronization information block and the SSS is located on a first OFDM symbol of the synchronization information block, the MIB is an MIB applied to the unlicensed frequency band, and when the PSS is not located on the third OFDM symbol of the synchronization information block and the SSS is not located on the first OFDM symbol of the synchronization information block, the MIB is an MIB applied to a licensed frequency band.

25. The apparatus according to any one of claims 22 to 24, wherein that a time domain position of the PBCH information is used to indicate that the MIB comprised in the synchronization information block is an MIB applied to the unlicensed frequency band comprises:

when first PBCH information is located in a first frequency domain position on the first OFDM symbol of the synchronization information block, and/or second PBCH information is located in a second frequency domain position on the first OFDM symbol of the synchronization information block, the MIB is an MIB applied to the unlicensed frequency band, and when the first PBCH information is not located in the first frequency domain position on the first OFDM symbol of the synchronization information block, and/or the second PBCH information is not located in the second frequency domain position on the first OFDM symbol of the synchronization information block, the MIB is an MIB applied to the licensed frequency band; or

when first PBCH information is located in a first frequency domain position on the third OFDM symbol of the synchronization information block, and second PBCH information is located in a second frequency domain position on the third OFDM symbol of the synchronization information block, the MIB is an MIB applied to the unlicensed frequency band, and when the first PBCH information is not located in the first frequency domain position on the third OFDM symbol of the synchronization information block, and the second PBCH information is not located in the second frequency domain position on the third OFDM symbol of the synchronization information block, the MIB is an MIB applied to the licensed frequency band; or

when a first demodulation reference signal DMRS is located in a third frequency domain position on the first OFDM symbol of the synchronization information block, and/or a second DMRS is located in a fourth frequency domain position on the first OFDM symbol of the synchronization information block, the MIB is an MIB applied to the unlicensed frequency band, and when the first demodulation reference signal DMRS is not located in the third frequency domain position on the first OFDM symbol of the synchronization information block, and/or the second DMRS is not located in the fourth frequency domain position on the first OFDM symbol of the synchronization information block, the MIB is an MIB applied to the licensed frequency band; or

when a first DMRS is located in a third frequency domain position on the third OFDM symbol of the synchronization information block, and a second DMRS is located in a fourth frequency domain position on the third OFDM symbol of the synchronization information block, the MIB is an MIB applied to the unlicensed frequency band, and when the first DMRS is not located in the third frequency domain position on the third OFDM symbol of the synchronization information block, and the second DMRS is not located in the fourth frequency domain position on the third OFDM symbol of the synchronization information block, the MIB is an MIB applied to the licensed frequency band, wherein

the first DMRS is comprised in the first PBCH information, and the second DMRS is comprised in the second PBCH information.

26. The apparatus according to claim 25, wherein the first frequency domain position comprises subcarriers whose subcarrier sequence numbers are {0, 1, ..., 47} on the synchronization information block, and the second frequency domain position comprises subcarriers whose subcarrier sequence numbers are {192, 193, ..., 239} on the synchronization information block; or the first frequency domain position comprises subcarriers whose subcarrier sequence numbers are {192, 193,..., 239} on the synchronization information block, and the second frequency domain position comprises subcarriers whose subcarrier sequence numbers are {0, 1, ..., 47} on the synchronization information block.

27. The apparatus according to claim 25, wherein the third frequency domain position comprises subcarriers whose subcarrier sequence numbers are {0+v, 4+v, ..., 44+v} on the synchronization information block, and the fourth frequency domain position comprises subcarriers whose subcarrier sequence numbers are {192+v, 196+v, ..., 236+v} on the synchronization information block; or the first frequency domain position comprises subcarriers whose subcarrier sequence numbers are {192+v, 196+v, ..., 236+v} on the synchronization information block, and the second frequency domain position comprises subcarriers whose subcarrier sequence numbers are {0+v, 4+v, ..., 44+v} on the synchronization information block, wherein

$$v = N_{ID}^{cell} \bmod 4 \, ,$$

and $N_{ID}^{cell}$ is a cell identifier.

28. The apparatus according to any one of claims 25 to 27, wherein

no information is comprised on subcarriers whose subcarrier sequence numbers are {0, 1, ..., 55, 183, 184, ..., 191} on the first OFDM symbol of the synchronization information block and subcarriers whose subcarrier sequence numbers are {48, 49, ..., 55, 183, 184, ..., 239} on the third OFDM symbol of the synchronization information block; or

no information is comprised on subcarriers whose subcarrier sequence numbers are {48, 49, ..., 55, 183, 184, ..., 239} on the first OFDM symbol of the synchronization information block and subcarriers whose subcarrier sequence numbers are {0, 1, ..., 55, 183, 184, ..., 191} on the third OFDM symbol of the synchronization information block; or

no information is comprised on subcarriers whose subcarrier sequence numbers are {48, 49, ..., 55} and subcarriers whose subcarrier sequence numbers are {183, 184, ..., 192} on the first OFDM symbol of the synchronization information block, and no information is comprised on subcarriers whose subcarrier sequence numbers are {0, 1, ..., 55} and subcarriers whose subcarrier sequence numbers are {183, 184, ..., 239} on the third OFDM symbol of the synchronization information block; or

no information is comprised on subcarriers whose subcarrier sequence numbers are {0, 1, ..., 55} and subcarriers whose subcarrier sequence numbers are {183, 184, ..., 239} on the first OFDM symbol of the synchronization information block, and no information is comprised on subcarriers whose subcarrier sequence numbers are {48, 49, ..., 55} and subcarriers whose subcarrier sequence numbers are {183, 184, ..., 192} on the third OFDM symbol of the synchronization information block.

29. A computer-readable storage medium, comprising instructions, wherein when the instructions are run on a computer, the computer is enabled to perform the method according to any one of claims 1 to 7 or the method according to any one of claims 8 to 14.

FIG. 1

FIG. 2

FIG. 3

| Network device | Terminal device |

401: Determine a synchronization information block

402: Synchronization information block

403: Determine, based on a time domain position of at least one of a PSS, an SSS, and PBCH information included in the synchronization information block, whether an MIB is an MIB applied to an unlicensed frequency band

FIG. 4

Frequency domain

192-239

PBCH

56-182    SSS    PBCH    PSS    PBCH    20 RBs

0-47                     PBCH

0      1      2      3      OFDM symbol

FIG. 5

Frequency domain

Frequency domain

Frequency domain

| | | | | | |
|---|---|---|---|---|---|
| 192-239 | PBCH | | PBCH | | |
| 56-182 | PSS | PBCH | SSS | PBCH | 20 RBs |
| 0-47 | | | PBCH | | |

0 1 2 3 OFDM symbol

(a)

0 1 2 3 OFDM symbol

(b)

0 1 2 3 OFDM symbol

(c)

FIG. 6

EP 4 135 432 A1

Frequency domain

192-239

56-182

0-47

PBCH

SSS PBCH PSS PBCH

PBCH

20 RBs

0   1   2   3   OFDM symbol

(a)

Frequency domain

192-239

56-182

0-47

PBCH

SSS PBCH PSS PBCH

PBCH

20 RBs

0   1   2   3   OFDM symbol

(b)

Frequency domain

192-239

56-182

0-47

PBCH

SSS PBCH PSS PBCH

PBCH

20 RBs

0   1   2   3   OFDM symbol

(c)

FIG. 7

Network device

Terminal device

801: Determine a synchronization information block

802: Synchronization information block

803: Determine, based on at least one field included in the synchronization information block, that an MIB is a first-type MIB or a second-type MIB

FIG. 8

Network device

Terminal device

901: Determine a synchronization information block

902: Synchronization information block

903: Determine, based on a time domain position of at least one of a PSS, an SSS, and PBCH information included in the synchronization information block, that an MIB is a first-type MIB or a second-type MIB

FIG. 9

1000

MIB determining apparatus

1001

Transceiver unit

1002

Processing unit

FIG. 10

1100

MIB determining apparatus

1101

Transceiver

1102

Processor

1104

1103

Memory

FIG. 11

EP 4 135 432 A1

| Network device | | Terminal device |
|---|---|---|
| 1200: Determine a synchronization signal block | | |

1201: Send the synchronization signal block →

1202: Determine a first-type MIB or a second-type MIB of an MIB based on a time domain position of the synchronization information block

FIG. 12

Licensed frequency band

| 10 ms | |
|---|---|
| 5 ms | 5 ms |

Group of synchronization information blocks

Unlicensed frequency band

| 10 ms | |
|---|---|
| 5 ms | 5 ms |

Group of synchronization information blocks

FIG. 13

50

Licensed frequency band

10 ms

5 ms

5 ms

1 ms
0.5 ms
1 ms
1 ms
1 ms
1 ms
1 ms

Group of synchronization information blocks

Unlicensed frequency band

10 ms

5 ms

5 ms

1 ms
0.5 ms
1 ms
1 ms
1 ms
1 ms
1 ms

Group of synchronization information blocks

FIG. 14

## INTERNATIONAL SEARCH REPORT

| | |
|---|---|
| | International application No. |
| | **PCT/CN2021/092682** |

**A.     CLASSIFICATION OF SUBJECT MATTER**

H04W 72/00(2009.01)i

According to International Patent Classification (IPC) or to both national classification and IPC

**B.     FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 同步, 信息块, SS, MIB, PSS, SSS, PBCH, DMRS, 非授权, 频段, 发送, 子载波, synchronization, signal, block, pattern, Master Information Block, unlicensed, spectrum, transmit, sub, carrier

**C.     DOCUMENTS CONSIDERED TO BE RELEVANT**

| Category* | Citation of document, with indication, where appropriate, of the relevant passages | Relevant to claim No. |
|---|---|---|
| X | CN 107018573 A (ZTE CORPORATION) 04 August 2017 (2017-08-04) description paragraphs 0010-0070, 0112 | 1-9, 15-23, 29 |
| A | US 2019007896 A1 (INTEL IP CORPORATION) 03 January 2019 (2019-01-03) entire document | 1-29 |
| A | US 2019342826 A1 (TALARICO SALVATORE et al.) 07 November 2019 (2019-11-07) entire document | 1-29 |
| A | ZTE. "Discussion on Frame Structure for NR-U" *R1-1806459, 3GPP TSG RAN WG1 Meeting #93 Busan, Korea,* 25 May 2018 (2018-05-25), entire document | 1-29 |

☐ Further documents are listed in the continuation of Box C.     ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **23 July 2021** | **30 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/092682**

| Patent document cited in search report | | | Publication date (day/month/year) | Patent family member(s) | | | Publication date (day/month/year) |
|---|---|---|---|---|---|---|---|
| CN | 107018573 | A | 04 August 2017 | WO | 2017129002 | A1 | 03 August 2017 |
| US | 2019007896 | A1 | 03 January 2019 | WO | 2017127172 | A1 | 27 July 2017 |
| | | | | US | 10932185 | B2 | 23 February 2021 |
| US | 2019342826 | A1 | 07 November 2019 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010414749
- CN 202110183216